# EUROPEAN PATENT SPECIFICATION

(11) **EP 3 831 488 B1**
(45) Date of publication and mention of the grant of the patent: **03.05.2023**
(21) Application number: 19857561.5
(22) Date of filing: 03.09.2019
(51) Int. Cl.: B01L 3/02, G01N 1/00, G01N 35/10

(54) **PIPETTE AND LIQUID COLLECTION METHOD**
PIPETTE UND FLÜSSIGKEITSSAMMELVERFAHREN
PIPETTE ET PROCÉDÉ DE COLLECTE DE LIQUIDE

(30) Priority: 03.09.2018 JP 2018164442
(43) Date of publication of application: 09.06.2021
(73) Proprietor: Kyocera Corporation, Kyoto 612-8501 (JP)
(72) Inventor: MIYAZATO, Kentarou, Kyoto-shi, Kyoto 612-8501 (JP)
(74) Representative: Viering, Jentschura & Partner mbB Patent- und Rechtsanwälte
(86) International application number: PCT/JP2019/034511
(87) International publication number: WO 2020/050235

(56) References cited:
- WO-A1-2013/094373
- DE-A1-102015 108 092
- GB-A- 2 510 027
- JP-A- 2000 230 886
- JP-A- 2006 138 765
- JP-A- 2018 523 120
- US-A- 3 615 230
- US-A- 5 260 030
- US-A1- 2007 109 139
- US-A1- 2009 055 131

## Description

### Technical Field

The present disclosure relates to a pipette and a liquid collection method.

### Background Art

Known in the past has been a pipette which drives a pump action device to generate a negative pressure in an internal portion of a capillary and thereby suction a liquid into the capillary (for example Patent Literature 1). The pipette in Patent Literature 1 has a nozzle cap, a vessel communicated with the nozzle cap, and an electrostatic actuator which configures a portion of an inner surface of the vessel. Due to flexural deformation of a portion of the inner surface of the vessel by the electrostatic actuator, the liquid is suctioned or ejected from the nozzle cap. Further, a suction amount or amount of ejection of the liquid is prescribed according to the amount of flexure.
US 3 615 230 A discloses a method and an apparatus for automatically carrying out chemical analyses. The apparatus comprises a series of sample holders, a dosing pump, a transporting device for guiding the sample holders past the dosing pump, a plurality of reaction vessels associated with each sample holder, and control means for moving the dosing pump relative to the holders and for providing for withdrawal of an unmeasured quantity of sample from the sample holders and for dispensing this sample quantity in smaller measured quantities into associated reaction vessels.
DE 10 2015 108092 A1 discloses a pipetting device for handling a liquid sample comprising a piston which is arranged displaceable within a capillary, wherein a lower area of the piston is formed fluid-tight with the inner surface of the capillary and wherein at least parts of the piston and the capillary are formed to be detachable from the pipetting device, characterized in that the piston is formed as electrically conductive and the capillary as non-electrically conductive and an electrical reference signal is applied to the piston.
US 2007/109139 A1 discloses a method, an apparatus and a computer program to detect liquid leakage of a liquid transfer device with electrical means.
US 2009/0055131 A1 discloses a data acquisition apparatus for use with a fluid dispensing device and providing an electronic record of the precise volumes of fluid dispensed from the fluid dispensing device. The fluid dispensing device may be laboratory or clinical apparatus such as an automatic or manual pipette. The apparatus generally includes a fluid volume sensor for detecting the volume of fluid released from the fluid dispensing device and producing electrical signals determined by the volume of fluid released from the device, a data transmission device configured to receive the electrical signals, and a data storage device for storing them.
US 5 260 030 A discloses a pipette tip for use with a pipetter and a method for dispensing a precise volume of a fluid. The pipette tip has a hollow body which defines an interior volume, and a channel therein having a calibrated volume. Channel extends from an intake opening to an overflow opening positioned inside the interior volume of the tip above a reservoir portion inside the tip. Fluid drawn through the intake opening and into the channel in excess of the calibrated channel volume is gravity-shed or sloughed into an overflow reservoir. Thus, a calibrated volume of fluid remains in the channel and can be dispensed accurately from the channel. Additionally, the reservoir portion captures and contains the overflow fluid in a stable condition, permitting the reservoir to be used to react various substances with the overflow fluid inside the pipette tip. The internal reservoir also may be divided by a partition to provide a plurality of reservoirs or sub-volumes inside the pipette tip.
GB 2 510 027 A discloses a pipette comprising a pump for liquid handling wherein the pump includes a pump chamber which houses movable element such as a piston or plunger, a piezo motor which engages with the movable element to move the element, a displacement sensor arranged adjacent the moveable element for monitoring the displacement of the movable element, and a controller connected to the sensor and piezo motor which controls the output power of the motor wherein the piezo motor is adapted to actuate the moving element to be displaced into or out of the pump chamber such that either the piezo motor rotates or the moveable element rotates. The piezo motor may be an ultrasonic piezo motor. The pump may also include a flow rate sensor. The controller may also include a data storage unit.

### Citation List

### Patent Literature

Patent Literature 1: Japanese Published Unexamined Patent Application No. H07-213926

### Summary of Invention

The present invention provides a pipette according to claim 1 and a liquid collection method according to claim 9.

Further embodiments of the present invention are disclosed in the dependent claims.

### Brief Description of Drawing

FIG. 1 is a cross-sectional view schematically showing a specific example of a pipette according to a first embodiment.
FIG. 2 is a schematic view showing an example of a change along with time of voltage in a signal output by a control part in the pipette in FIG. 1.
FIG. 3A, FIG. 3B, FIG. 3C, FIG. 3D, and FIG. 3E are schematic views showing the mode of operation according to the signal in FIG. 2.
FIG. 4 is a schematic view showing details of a portion in the signal in FIG. 2.
FIG. 5A, FIG. 5B, FIG. 5C, FIG. 5D, FIG. 5E, and FIG. 5F are schematic views showing the mode of operation according to the signal in FIG. 4.
FIG. 6A and FIG. 6B are schematic views for explaining an example of a method for setting a brake signal included in the signal in FIG. 4.
FIG. 7 is a block diagram showing the configuration of a principal part according to a signal processing system of a control unit in the pipette in FIG. 1.
FIG. 8 is a flow chart showing an example of the routine of the processing according to the pipette in FIG. 1.
FIG. 9 is a block diagram showing the configuration of a principal part according to a signal processing system of a control unit in a pipette according to a second embodiment.
FIG. 10 is a schematic view showing a portion of a drive signal in a pipette according to a third embodiment.
FIG. 11A and FIG. 11B are graphs showing an influence of the brake signal exerted upon variation of the suction amount.
FIG. 12 is a graph showing the influence of a start timing of the brake signal exerted upon the suction amount.
FIG. 13 is a graph showing an influence of an initial volume of the pressure chamber exerted upon the suction amount.

### Description of Embodiments

Hereinafter, embodiments of the present disclosure will be explained with reference to the drawings . Note that, the drawings used in the following explanation are schematic ones. Size ratios or the like in the drawings will not always coincide with the actual ones. Even among a plurality of drawings showing the same member, for emphasizing the shape etc., sometimes the size ratios or the like will not coincide with each other.

In the second and following embodiments, basically only portions which are different from those in the already explained embodiments will be explained. The matters which are not particularly explained may be the same as those in the already explained embodiments.

### <First Embodiment>

### [Outline of Pipette]

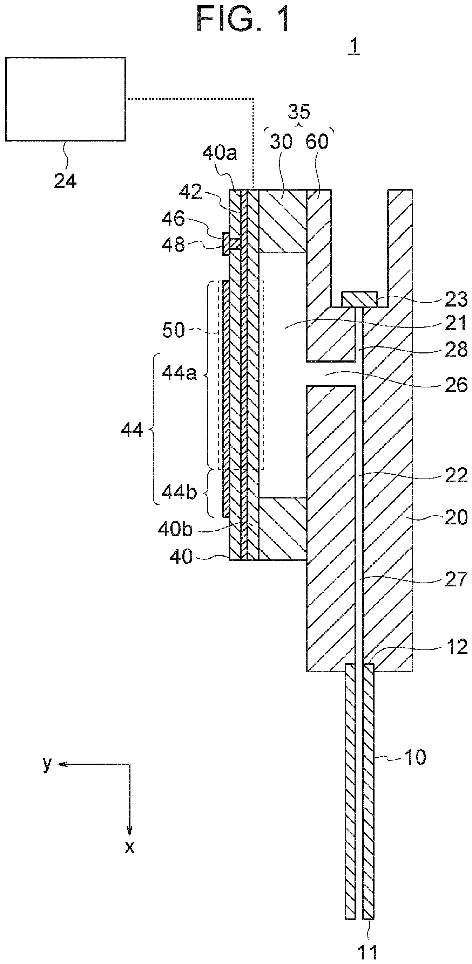

FIG. 1 is a cross-sectional view schematically showing the configuration of a pipette 1 according to an embodiment of the present disclosure. Note that, in the drawing, for convenience, an orthogonal coordinate system xy is attached. The +x side is the side which is made a lower part when suction a liquid by the pipette 1.

The pipette 1 has a capillary 10, a pipette body 20 which changes an air pressure in the capillary 10, and a control unit 24 which controls the operation of the pipette body 20. In a state where the front end on the +x side (first end 11) of the capillary 10 is in contact with the liquid, the interior of the capillary 10 is evacuated (reduced in pressure) from a rear end (second end 12) of the capillary 10 by the pipette body 20 whereby the liquid is suctioned into the capillary 10. At this time, for example, the suction amount of the liquid can be adjusted by adjusting the evacuation amount from the capillary 10.

### [Capillary]

The capillary 10 has a tubular shape with the first end 11 and the second end 12 forming the two ends in a longitudinal direction (x-direction) opened. Note that, a "tubular shape" means a shape which is long in one direction (the length in one direction is longer compared with the length in the other direction), is hollow, and is opened in the two ends. It does not mean only a cylindrical shape.

The schematic shape of the capillary 10 may be made various shapes. For example, in a transverse section of the capillary 10 (cross-section perpendicular to the longitudinal direction, same is true hereinafter) , an inner edge (inner surface of the capillary 10) and/or outer edge (outer surface of the capillary 10) may be circular-shaped, ellipse-shaped, egg-shaped, polygon-shaped, or the like. Further, for example, the shape and/or size of the transverse section (inner edge and/or outer edge) may be constant over the entire length of the capillary 10 or may differ according to the position in the longitudinal direction in at least a portion of the entire length of the capillary 10. Further, for example, in the transverse section of the capillary 10, the inner edge and the outer edge may be similar shapes to each other or need not be similar shapes. Further, for example, the center line of an internal space (flow path) of the capillary 10 may linearly extend from the first end 11 to the second end 12 or may bend in at least a portion. Note that, in the explanation of the present embodiment, for convenience, the transverse section (inner edge and outer edge) of the capillary 10 is circular at any position in the longitudinal direction. Further, the shape and size of the transverse section are made constant in the longitudinal direction.

The dimensions of the capillary 10 may be suitably set in accordance with various circumstances such as the amount of the liquid to be collected and/or method of attachment to the pipette body 20. For example, the inner diameter of the capillary 10 may be made 0.01 mm to 1.0 mm. Further, for example, the outer diameter of the capillary 10 may be made 0.02 mm to 2.0 mm. Further, for example, the length of the capillary 10 may be made 10 mm to 100 mm.

The material for the capillary 10 may be made various ones . For example, as the material, there can be mentioned glass, a resin, ceramics, and metal. As the resin, for example, there can be mentioned polypropylene, polyethylene, and polytetrafluoroethylene. Further, for example, in the capillary 10, one portion and another portion in the longitudinal direction may be configured by materials different from each other and/or one portion and another portion in the diameter direction may be configured by materials different from each other. Further, for example, the capillary 10 may be configured by integrally formed a single member or may be configured by two or more members fixed to each other. Further, for example, the capillary 10 may also be configured by the member made of one material on which a film made of another material is formed at least one portion of the surface. Further, for example, at least one portion (that is part or all) of the capillary 10 may be configured by a material having a light transmission property (for example a resin or glass).

At least a portion (that is part or all) of the surface of the capillary 10 may have repellency. "Have repellency" means for example a contact angle of the liquid being 90° or more. Note that, in a case where the liquid to be suctioned by the pipette is not identified, presence of repellency may be judged by using the contact angle of water. The contact angle in the case where there is repellency may be suitably set. For example, the contact angle may be 90° to 95° (that is a value close to 90°), may be 95° to 150° , or may be more than 150° . Note that, a magnitude more than 150° may have so-called super repellency.

In the surface of the capillary 10, a region having repellency may be suitably set. For example, the region having repellency includes an end surface of the first end 11 (surface facing the +x direction) and a portion on the +x side in the inner surface of the capillary 10 and a portion on the +x side of the outer surface of the capillary 10. In other words, the region having repellency includes a region contacting the liquid. By the region contacting the liquid has repellency, for example a possibility of deposition and/or unwanted movement of the liquid is reduced, therefore precision of the collection amount of the liquid is improved.

The capillary 10 (part or all) may be given repellency on the surface by for example formation by a material having repellency. Further, for example, the capillary 10 (part or all) may be given repellency on the surface by formation of a repellent film on the surface of a member made of a material which does not have repellency.

As the repellent film, use may be made of various films. For example, there can be mentioned a repellent film formed by a silane coupling agent, metal alkoxide-containing repellent film, silicone-containing repellent film, and fluorine-containing repellent film. As the method for forming the repellent film on the surface of the capillary 10, various methods may be used. For example, use may be made of a dry process method or made of a wet process method. As the dry process method, for example there can be mentioned a physical vapor phase growth method and chemical vapor phase growth method. As the former, for example, there can be mentioned a physical vapor deposition process and sputtering method. As the latter, for example, there can be mentioned a chemical vapor deposition (CVD) process and atomic layer deposition (ALD) process. As the wet process method, for example, there can be mentioned a sol-gel method, dip coating method, and coating method.

The capillary 10 is for example made disposable and is made able to be attached and detached with respect to the pipette body 20. The attaching and detaching method may be a suitable one. For example, the capillary 10 may be fixed by being press-fitted into a hole of the pipette body 20 or may be fixed by fastening or locking by a not shown mechanism provided in the pipette body 20. However, the capillary 10 may be one repeatedly used. Further, the capillary 10 may be fixed (for example bonded) to the pipette body 20 so that detachment is impossible.

### [Pipette Body]

The pipette body 20 has a pressure chamber 21 (cavity) communicated with the internal portion of the capillary 10. Further, the pipette body 20 reduces pressure of (evacuates) the interior of the capillary 10 by increasing the volume of the pressure chamber 21 and increases pressure of (supplies air) the interior of the capillary 10 by reducing the volume of the pressure chamber 21. Due to this, for example, suction and ejection of the liquid by the capillary 10 are realized. The configuration of the pipette body 20 realizing such an operation may be a suitable one. Below, one example thereof will be shown.

The pipette body 20 for example has a flow path member 35 configuring a flow path (including a pressure chamber 21) communicated with the internal portion of the capillary 10, an actuator 40 which changes the volume of the pressure chamber 21, and a valve 23 which permits or prohibits communication between the internal portion (flow path) of the flow path member 35 and an external portion.

### (Flow Path Member)

The schematic outer shape and size of the flow path member 35 may be suitable ones. In the example shown, the schematic outer shape of the flow path member 35 is shaft-shaped in series to the capillary 10 (a shape where the length in the x-direction is longer than the length in the other direction). Further, its size is for example made large enough for the user to nip or grip it (for example the maximum outer diameter is 50 mm or less).

The internal space of the flow path member 35 for example has the already explained pressure chamber 21, a communication flow path 27 linking the capillary 10 with the pressure chamber 21, and an opening flow path 28 which links the communication flow path (from another viewpoint, the pressure chamber 21) with an external portion.

The shape, position, size, etc. of the pressure chamber 21 may be suitably set. In the example shown, the pressure chamber 21 is positioned on the side surface in the flow path member 35. Further, for example, the schematic shape of the pressure chamber 21 is a thin shape with a substantially constant thickness having a direction overlapping the actuator 40 (y-direction) as the thickness direction. The "thin shape" referred to here is a shape with a length in the y-direction shorter than the maximum length in each direction perpendicular to the y-direction. The planar shape (shape when viewed in the y-direction) of the pressure chamber 21 maybe a circle, ellipse, rectangle, diamond, or another suitable shape. The thickness (y-direction) of the pressure chamber 21 is for example 10 um to 5 mm. The diameter (maximum length in each direction perpendicular to the y-direction) of the pressure chamber 21 is for example 2 mm to 50 mm.

The shapes, positions, sizes, etc. of the communication flow path 27 and opening flow path 28 may be suitably set as well. For example, the flow path member 35 has a first flow path 22 which extends from the capillary 10 in the longitudinal direction (x-direction) of the capillary 10 and a second flow path 26 which extends from the middle of the first flow path 22 in a direction crossing the first flow path 22 and reaches the pressure chamber 21. Further, the communication flow path 27 is configured by a part in the first flow path 22 from the connection position with the second flow path 26 to the capillary 10 side and the second flow path 26. By such a flow path configuration, for example, a possibility that the liquid (for example splashing thereof) will enter into the pressure chamber 21 and be deposited onto the actuator 40 is reduced. In turn, a possibility that the operation characteristics of the actuator 40 will change due to the deposited liquid is reduced.

Further, the first flow path 22 is for example communicated with the external portion of the flow path member 35 on the side opposite to the capillary 10. Further, the opening flow path 28 is configured by a part in the first flow path 22 from the connection position with the second flow path 26 to the opposite side to the capillary 10. Accordingly, the flow path for escape of the liquid so as not to enter into the pressure chamber 21 is used also as the opening flow path 28 for opening the pressure chamber 21 to the external portion, therefore the space efficiency is improved.

The shapes and dimensions of the transverse sections of the first flow path 22 and the second flow path 26 may be suitably set. For example, the transverse sections of the first flow path 22 and the second flow path 26 are circular with diameters of 0.05 mm to 2 mm. Further, the inner diameters of the first flow path 22 and the second flow path 26 may be the same as each other or may be different from each other. The shape and size of the transverse section of the first flow path 22 and/or the second flow path 26 may be constant or may change in the longitudinal direction.

The flow path member 35 may be configured by a combination of members which are made of suitable materials and have suitable shapes. In the example shown, the flow path member 35 has a first part 30 and a second part 60 which are bonded to each other. The first part 30 has a via hole which becomes the pressure chamber 21. The second part 60 has the first flow path 22 and the second flow path 26. The pressure chamber 21 is configured by a space surrounded by the first part 30, the second part 60, and the actuator 40. Note that, each of the first part 30 and the second part 60 may be configured by a combination of a plurality of members as well. The materials for the first part 30 and the second part 60 may be for example metal, ceramics, or a resin or a combination of any of them.

### (Actuator)

The actuator 40 for example configures one of the inner surfaces of the pressure chamber 21. Specifically, for example, the actuator 40 is substantially plate-shaped and is bonded to the first part 30 so as to close the via hole of the first part 30 from the opposite side to the second part 60 and configures the inner surface on the side opposite to the inner surface in which the communication flow path 27 is opened. Further, the actuator 40 flexes to the pressure chamber 21 side (in other words, makes the inner surface of the pressure chamber 21 displace inward) and thereby reduces the volume of the pressure chamber 21. Conversely, the actuator 40 flexes to the opposite side to the pressure chamber 21 (in other words, makes the inner surface of the pressure chamber 21 displace outward) and thereby increases the volume of the pressure chamber 21.

The specific configuration of the actuator 40 causing the flexural deformation as described above may be a suitable one. For example, the actuator 40 is configured by a unimorph type piezoelectric element. In more detail, for example, the actuator 40 has two stacked piezoelectric ceramic layers 40a and 40b. Further, the actuator 40 has an internal electrode 42 and a surface electrode 44 which face each other while sandwiching the piezoelectric ceramic layer 40a therebetween. The piezoelectric ceramic layer 40a is polarized in the thickness direction.

Further, when voltage is supplied to the piezoelectric ceramic layer 40a in the same direction as the polarization direction by the internal electrode 42 and the surface electrode 44, the piezoelectric ceramic layer 40a contracts in the plane direction. On the other hand, the piezoelectric ceramic layer 40b does not cause such contraction. As a result, the piezoelectric ceramic layer 40a flexes to the piezoelectric ceramic layer 40b side. That is, the actuator 40 flexes to the pressure chamber 21 side. When voltage in an inverse direction to that described above is supplied, the actuator 40 flexes to the opposite side to the pressure chamber 21.

The shape and size etc. of the actuator 40 may be suitably set. For example, the actuator 40 is a flat plate shape having a suitable planar shape. The planar shape may be similar to the planar shape of the pressure chamber 21 or need not be similar. The maximum length in each direction when viewed on a plane (when viewed in the y-direction) is for example 3 mm to 100 mm. The thickness (y-direction) of the actuator 40 is for example 10 um to 2 mm. The materials, dimensions, shapes, conduction methods, etc. of various members configuring the actuator 40 may be suitably set as well. One example will be shown below.

The thicknesses of the piezoelectric ceramic layers 40a and 40b may be made for example 10 um to 30 um. The materials for the piezoelectric ceramic layers 40a and 40b may be made for example ceramic materials having ferro-electricity. As such ceramic materials, there can be mentioned lead zirconate titanate (PZT), NaNbOs, KNaNbOs, BaTiOs, (BiNa)NbOs, and BiNaNbsOis ceramics. The piezoelectric ceramic layer 40b may be configured by a material other than a piezoelectric substance as well.

The internal electrode 42 is for example positioned between the piezoelectric ceramic layer 40a and the piezoelectric ceramic layer 40b and has substantially the same size as the actuator 40. The thickness of the internal electrode 42 may be made for example 1 um to 3 um. The internal electrode 42 is for example made conductive from an external portion by a via electrode 48 penetrating through the piezoelectric ceramic layer 40a and a connection electrode 46 which is positioned on the surface of the actuator 40 and is connected to the via electrode 48.

The surface electrode 44 is for example positioned on the piezoelectric ceramic layer 40a on the side opposite to the piezoelectric ceramic layer 40b (outer side relative to the pressure chamber 21) and has a surface electrode body 44a and a lead-out electrode 44b. The surface electrode body 44a for example has a planar shape which is substantially equal to the pressure chamber 21 and is provided so as to be superimposed on the pressure chamber 21 in the thickness direction. The lead-out electrode 44b is formed so as to be drawn from the surface electrode body 44a. The thickness of the surface electrode 44 may be made for example 0.1 um to 1 µm.

The materials for the internal electrode 42, the surface electrode 44, the connection electrode 46, and the via electrode 48 may be for example metal materials. More specifically, for example, the materials for the internal electrode 42 and via electrode 48 may be made Ag-Pd. The materials for the surface electrode 44 and connection electrode 46 may be made for example Au.

Note that, the actuator 40 or a portion of the actuator 40 (for example a portion superimposed on the surface electrode body 44a) will be sometimes referred to as a "driving part 50". The actuator is not limited to a unimorph type piezoelectric element. For example, the actuator may be a bimorph type piezoelectric element or may be an electrostatic actuator.

### (Valve)

The valve 23 is for example provided at a position where the opening flow path 28 is communicated with an external portion. By opening or closing of the valve 23, communication between the internal portion of the flow path member 35 and the external portion is permitted or prohibited. In a state where communication is prohibited, the pressure is reduced or increased inside the capillary 10 according to a change of the volume of the pressure chamber 21. On the other hand, in a state where communication is permitted, even if the volume of the pressure chamber 21 is changed, the pressure is not reduced and increased inside the capillary 10. An example of utilization of the mode of operation where the pressure is not reduced and increased will be explained later.

The valve 23 for example performs an opening and closing operation in response to a signal input from the external portion. As the valve 23, various valves such as an electromagnetic valve or a piezoelectric valve can be used. The valve 23 may be one which is closed when a signal is not input and is opened when the signal is input, may be one which is opened when a signal is not input and is closed when the signal is input, or may be one which respectively receives as input a signal for closing and a signal for opening.

### [Control Unit]

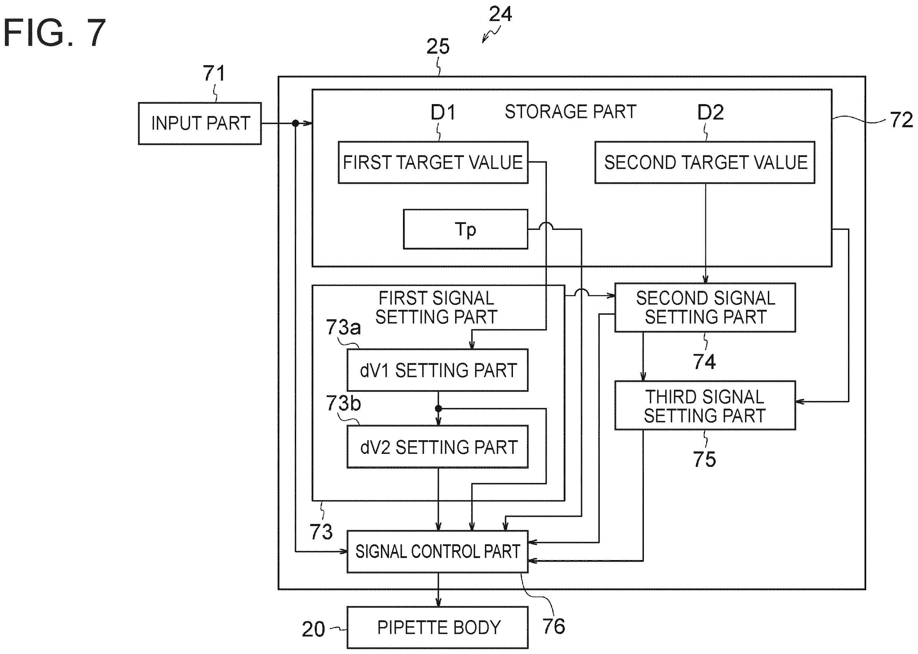

The control unit 24 is electrically connected with the actuator 40 and the valve 23 and controls operations of them. The control unit 24 has a control part 25 (FIG. 7) performing processing and input and output of signals and an input part 71 (FIG. 7) and/or an output part (not shown) connected to the control part 25.

The control part 25 gives an electrical signal to the actuator 40 to make the actuator 40 deform and thereby change the volume of the pressure chamber 21. Due to this, suction of the liquid into the capillary 10 and ejection of the liquid from the capillary 10 can be carried out. By driving the actuator 40 so that the volume of the pressure chamber 21 periodically increases and decreases, the liquid suctioned in the capillary 10 can be made to vibrate and be mixed as well.

Further, for example, the control part 25 gives an electrical signal to the valve 23 and thereby open and close the valve 23. By opening the valve 23 when the liquid ends up flowing into the first flow path 22, the liquid can be ejected from the valve 23 to the external portion. Further, after making the actuator 40 deform to suction the liquid, by opening the valve 23 to return the deformed actuator 40 to the original shape in that state and making the actuator 40 deform again after closing the valve 23, a large amount of liquid can be suctioned.

The control part 25 can be configured using various integrated circuits. Further, as the input part 71 which is connected to the control part 25, for example there can be mentioned one (a switch or the like) receiving operation by the user and/or one (a connector or the like) receiving a signal from an external apparatus. Further, as the output part which is connected to the control part 25, for example there can be mentioned one (a display device or the like) showing information to the user and/or one (a connector or the like) outputting a signal to an external apparatus . The control unit 24 may be provided on the pipette body 20 in a fixed manner or may be provided movable relative to the pipette body 20 or a portion (for example a driver) may be provided on the pipette body 20 in a fixed manner and the other portion (for example a portion outputting an instruction to the driver) may be provided movable relative to the pipette body 20.

### [Series of Operations of Pipette]

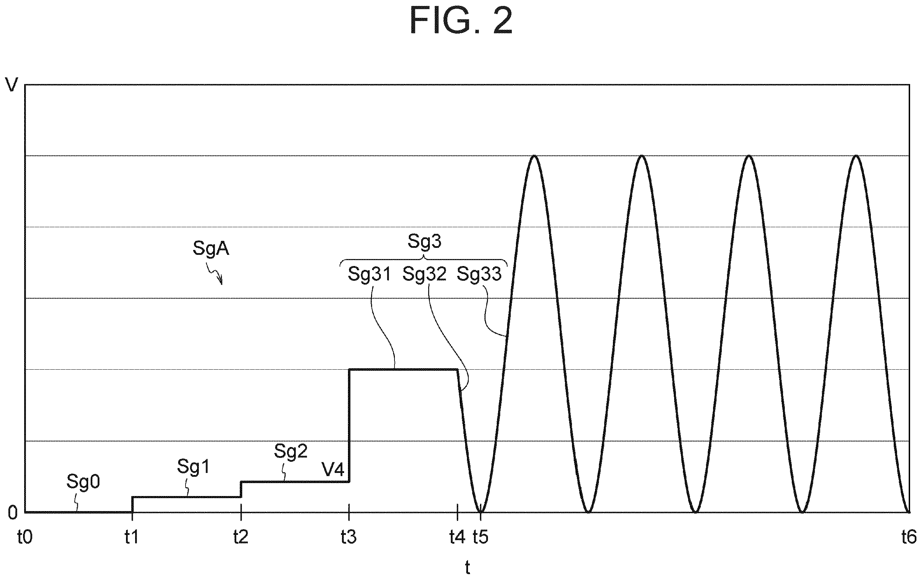

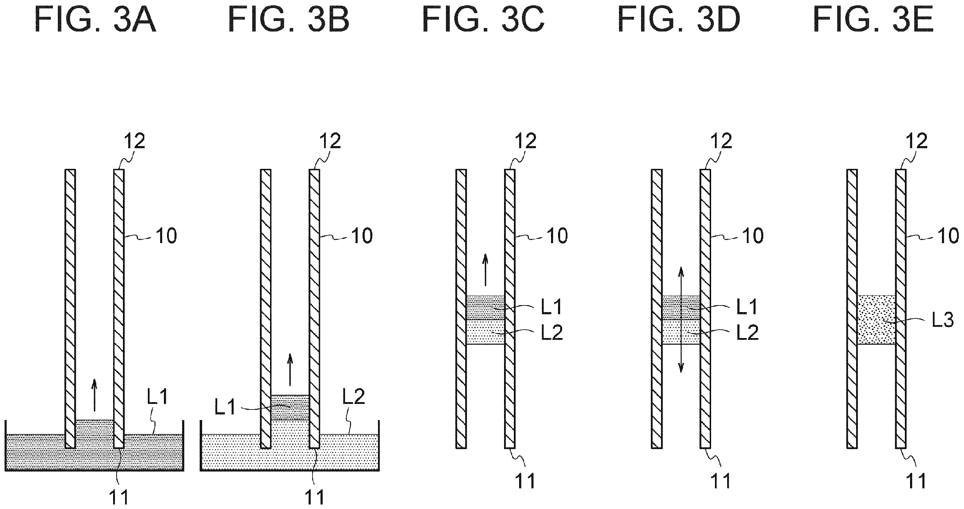

An example of the operation of the pipette 1 will be explained in outline. FIG. 2 is a graph substantially showing an example of temporary change of the voltage (signal level) in a drive signal SgA (Sg0 to Sg3) output by the control part 25. In FIG. 2, an abscissa "t" shows the time, and an ordinate "V" shows the voltage. FIG. 3A to FIG. 3E are schematic views showing states of the capillary 10 at any point of time plotted on the abscissa in FIG. 2.

As shown in FIG. 2, the drive signal SgA which is output by the control part 25 to the actuator 40 changes in the voltage along with an elapse of time and forms a waveform. On the other hand, the actuator 40 flexes with an amount of deformation corresponding to the voltage supplied. The term "corresponding" referred to here means for example a one-to-one correspondence. In other words, this is a relationship where the amount of deformation is uniquely prescribed with respect to the voltage (excluding a state where the deformation is saturated) . Accordingly, the actuator 40 receiving the drive signal SgA as input changes the volume of the pressure chamber 21 following the waveform (change of the voltage along with an elapse of time) of the drive signal SgA so that the volume of the pressure chamber 21 becomes a volume corresponding to the voltage of the drive signal SgA.

Note that, the relationship between the amount of change of the voltage of the drive signal SgA and the amount of change of the volume of the pressure chamber 21 is not limited to a proportional relationship. However, for convenience, an explanation will be given assuming a proportional relationship or almost proportional relationship. Accordingly, FIG. 2 may be grasped to show not only a temporary change of the voltage of the drive signal SgA, but also a temporary change of the volume of the pressure chamber 21.

Between the internal electrode 42 and the surface electrode 44, a reference potential is given to one, and the drive signal SgA is input to the other. Further, the voltage in FIG. 2 shows a potential difference between the reference potential and the drive signal SgA. In other words, the drive signal SgA is an unbalanced signal. However, the drive signal SgA may be made a balanced signal where a potential is changed in the two of the internal electrode 42 and the surface electrode 44 and the potential difference of them becomes the voltage shown in FIG. 2. Note that, in the present embodiment, a case where the drive signal SgA is an unbalanced signal is taken as an example. Therefore, in the following description, sometimes the explanation will be given using the voltage in FIG. 2 as the potential of the drive signal SgA.

A rise of the voltage (change of the potential to a positive side) of the drive signal SgA may correspond to an increase of the volume of the pressure chamber 21 or may correspond to a reduction of the volume of the pressure chamber 21. In other words, the direction from the electrode given the drive signal SgA to the electrode given the reference potential between the internal electrode 42 and the surface electrode 44, and the polarization direction of the piezoelectric ceramic layer 40a may be inverse orientations or may be the same orientation. In the following explanation, for convenience, the inverse orientations will be taken as an example. In other words, a case where the rise of the potential of the drive signal SgA corresponds to an increase of the volume of the pressure chamber 21 (that is, suction of the liquid) will be taken as an example.

In the following explanation, not only the operation of the pipette 1 itself, but also the operation carried out by the user of the pipette 1 or a device utilizing (or including) the pipette 1 will be explained. Here, an explanation will be given by taking as an example an aspect where the user operates the pipette 1. The operation of the user with respect to the pipette 1 may be suitably replaced by the operation of the device with respect to the pipette 1. For example, the movement of the pipette 1 by the user may be regarded as the movement of the pipette 1 by the device, and the operation by the user with respect to a not shown switch of the pipette 1 may be regarded as the output of the instruction signal with respect to the pipette 1 by the device. The same is true for the explanation of the block diagram and flow chart etc. which will be explained later. The device for example may perform the same operation as that by the user with respect to the pipette by sequence control.

### (Time t0 to t1: Liquid Contact Etc.)

Before the time t1, the control part 25 outputs an initial signal Sg0 to the actuator 40 in accordance with the operation by the user with respect to a not shown switch. The initial signal Sg0 is a signal having a constant potential. Due to this, the volume of the pressure chamber 21 is maintained at a predetermined initial volume. The potential of the initial signal Sg0 may be the reference potential or may be different from the reference potential. In the present embodiment, the case of the reference potential will be taken as an example. Note that, the drive signal SgA need not include the initial signal Sg0 either. That is, the state before the time t1 need not be the state where the initial signal Sg0 is output and may be a state where the drive signal SgA is not output. The valve 23 is closed after the time t0 unless it will be particularly explained.

Before the time t1, the user brings the first end 11 of the capillary 10 into contact the first liquid L1 (performs the liquid contact step). Further, the user instructs the pipette 1 to suction the first liquid L1 by operation with respect to a not shown switch provided in the pipette 1. The time of this instruction corresponds to the time t1 in FIG. 2.

### (Time t1 to t2: Suction of First Liquid Etc.)

When suction of the first liquid L1 is instructed, the control part 25 outputs the first signal Sg1 for driving the driving part 50 so that the volume of the pressure chamber 21 increases. The first signal Sg1 is for example substantially a signal (details are different as will be explained later) that rises from the potential of the initial signal Sg0 and maintains the potential after the rise. Due to this, as shown in FIG. 3A, the first liquid L1 is suctioned into the capillary 10 and is held near the first end 11 of the capillary 10. The amount of the suction for example substantially corresponds to the amount of rise of the potential of the first signal Sg1. In other words, the amount of rise of the potential is for example substantially set in accordance with the target value of the suction amount.

When a portion of the first liquid L1 is suctioned into the capillary 10, the user pulls up the capillary 10 from the remainder of the first liquid L1 (performs the liquid separation step) . Next, the user brings the first end 11 of the capillary 10 into contact the second liquid L2 (performs the liquid contact step) . Further, the user instructs the pipette 1 to suction the second liquid L2 by operation with respect to a not shown switch provided in the pipette 1. The time of this instruction corresponds to the time t2 in FIG. 2.

### (Time t2 to t3: Suction of Second Liquid Etc.)

When suction of the second liquid L2 is instructed, the control part 25 outputs a second signal Sg2 for driving the driving part 50 so that the volume of the pressure chamber 21 increases. The second signal Sg2 is for example substantially a signal (details are different as will be explained later) that rises from the potential maintained by the first signal Sg1 and maintains the potential after the rise. Due to this, as shown in FIG. 3B, the second liquid L2 is suctioned into the capillary 10 and is held near the first end 11 of the capillary 10. The amount of the suction for example substantially corresponds to the amount of rise of the potential of the second signal Sg2. In other words, the amount of rise of the potential is for example substantially set in accordance with the target value of the suction amount.

When a portion of the second liquid L2 is suctioned into the capillary 10, the user pulls up the capillary 10 from the remainder of the second liquid L2 (performs the liquid separation step). Further, the user instructs the pipette 1 to mix the first liquid L1 and the second liquid L2 by operation with respect to a not shown switch provided in the pipette 1. The time of this instruction corresponds to the time t3 in FIG. 2.

### (Time t3 to t4: Air Suction Etc.)

When instructed to mix the first liquid L1 and the second liquid L2, the control part 25 outputs a third signal Sg3 for mixing them. The third signal Sg3 for example includes an air suction signal Sg31, a restoration signal Sg32, and a mixing signal Sg33 in that order. Specifically, this is as follows.

The control part 25 outputs the air suction signal Sg31 for driving the driving part 50 so that the volume of the pressure chamber 21 increases first. The air suction signal Sg31 is for example substantially a signal where the potential rises from the potential maintained by the second signal Sg2 and the potential after the rise is maintained. Due to this, as shown in FIG. 3C, the first liquid L1 and the second liquid L2 move to the second end 12 side and stop at predetermined positions in the capillary 10. The amount of movement at this time corresponds to the amount of rise of the potential of the air suction signal Sg31. In other words, the potential difference is set in accordance with the target value of the amount of movement.

When the control part 25 judges that a predetermined time has passed after the start of output of the air suction signal Sg31, the control part 25 controls the valve 23 so as to open the opening flow path 28. Note that, this control may be carried out by any of the output of a signal and suspension of output as already explained. The predetermined time is made a time long enough for the first liquid L1 and the second liquid L2 to move to the target positions by the air suction signal Sg31.

### (Time t4 to t5: Restoration of Pressure Chamber Etc.)

When the control part 25 judges that a predetermined time has passed after start of the control of opening the valve 23 (time t4), the control part 25 outputs a restoration signal Sg32 for driving the driving part 50 so that the volume of the pressure chamber 21 is reduced. The restoration signal Sg32 is for example substantially a signal that falls from the potential maintained by the air suction signal Sg31 and maintains the potential after the fall. The volume of the pressure chamber 21 is reduced by the restoration signal Sg32, but the valve 23 is opened. Therefore, in the capillary 10, the pressure of the portion closer to the second end 12 side than the first liquid L1 and the second liquid L2 is not increased. In turn, the positions of the first liquid L1 and the second liquid L2 do not change.

The predetermined time from opening of the valve 23 to the time t4 is made a time long enough to open the valve 23. The potential after fall of the restoration signal Sg32 may be the same as, higher than, or lower than the potential by the initial signal Sg0 and/or than the reference potential. In the example shown, the potential after fall of the restoration signal Sg32 is the same as the potential by the initial signal Sg0 and reference potential. Note that, in this case, the restoration signal Sg32 maybe a falling part which occurs in a process of transition from the state of outputting the air suction signal Sg31 to the state of suspending the output (a part which is not intentionally output as the signal) as well.

After that, when the control part 25 judges that the predetermined time has passed from the time t4, the control part 25 controls the valve 23 so as to close the opening flow path 28. Note that, this control may be carried out by any of the output of the signal and suspension of the output of the signal as already explained. The predetermined time from the time t4 is made a time long enough to make the actuator 40 displace so as to correspond to the potential after fall of the restoration signal Sg32.

### (Time t5 to t6: Mixing Etc.)

When the control part 25 judges that the predetermined time has passed after the start of the control of closing the valve 23 (time t5), the control part 25 outputs the mixing signal Sg33 for driving the driving part 50 so that increase and decrease of the volume of the pressure chamber 21 is repeated. Due to this, as indicated by an arrow in FIG. 3D, the movement of the liquids to the second end 12 side and the movement of the liquids to the first end 11 side are alternately repeated. In turn, the first liquid L1 and the second liquid L2 are stirred, and the two are mixed as shown in FIG. 3E (a liquid L3 is generated) . A number of times of repetition may be suitably set.

The mixing signal Sg33 is a signal that repeatedly rises and falls in potential from the potential after fall of the restoration signal Sg32. Note that, the mixing signal Sg33 may start with rise of the potential (example shown) or may start with fall of the potential. Further, it may end with rise of the potential or may end with fall of the potential (example shown) . The amplitude of the potential may be constant or may change. Between rise and fall of the potential, the waveform may be line symmetrical or may be asymmetrical about a not shown symmetrical axis perpendicular to the time axis t.

After that, for example, the mixed liquid L3 is checked for its nature by irradiation of light in a state where it is held in the capillary 10. For example, fluorescence measurement, scattering measurement, absorption measurement, and/or spectrometric measurement is carried out. Although not particularly shown, before the measurement, the liquid L3 may be moved to a position suitable for the measurement as well by the same operation as the operation of moving the liquid to any position at the time t3 to t4. Further, the mixed liquid L3 need not be supplied for measurement while it is held in the capillary 10 as it is, but may be ejected from the capillary 10 and utilized for various purposes.

Note that, in FIG. 2, from t0 to t4, the waveform of the drive signal SgA is made a waveform which is formed by a plurality of straight lines such as a rectangular wave. Further, the waveform of the drive signal SgA is made a waveform that is formed by a sine wave or another curve from t4 to t6. However, part or all of the waveform from t0 to t4 may be configured by a curve or part or all of the waveform from t4 to t6 may be configured by a straight line. Further, the waveform may be made various waveforms different from illustration (for example sawtooth or triangular wave etc.).

### [Suction Operation of Pipette]

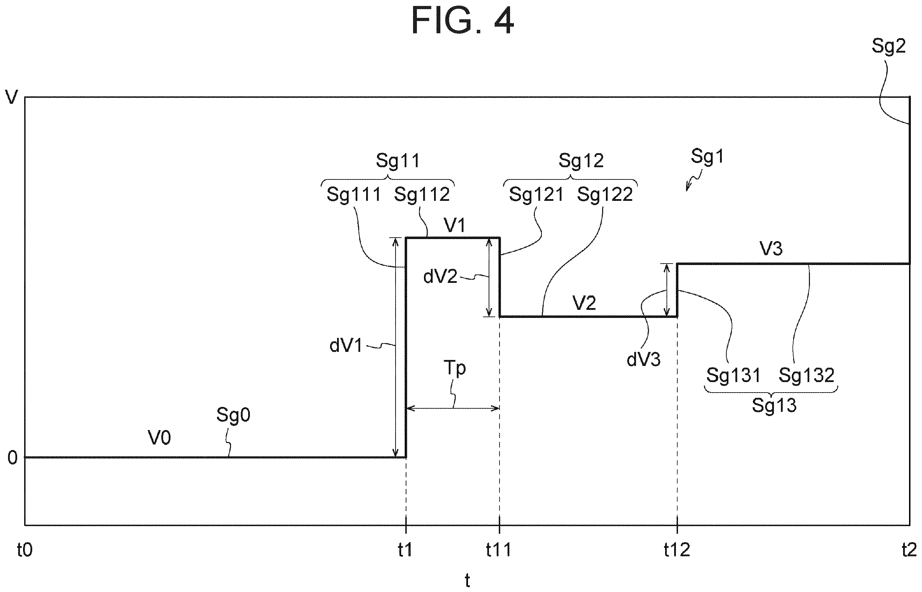

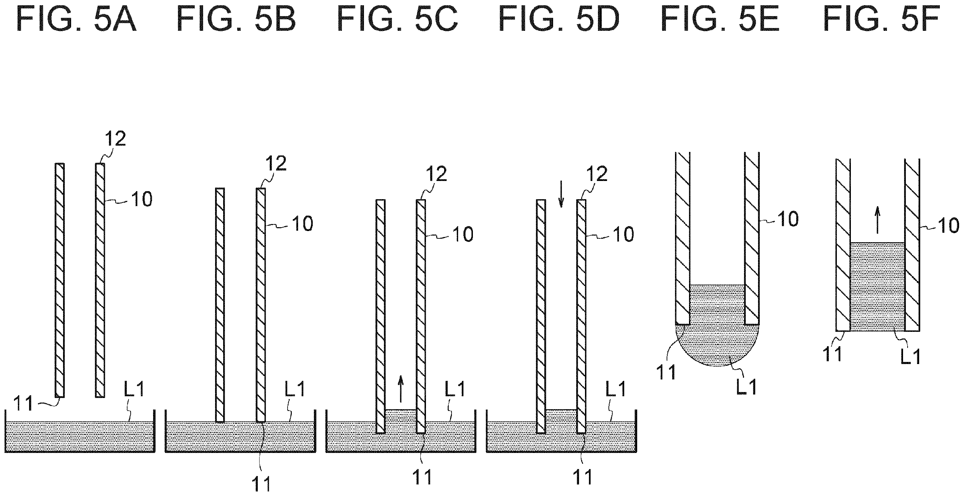

FIG. 4 is a view for showing details of the first signal Sg1 relating to the suction of the first liquid L1 and corresponds to an enlarged view of a portion in FIG. 2 (time t0 to t2). FIG. 5A to FIG. 5F are schematic views showing the states of the capillary 10 at any point of time plotted on the abscissa in FIG. 2.

The first signal Sg1 includes the suction signal Sg11, brake signal Sg12, and additional suction signal Sg13 in that order. Specifically, this is as follows.

### (Time t0 to t1: Liquid Contact Etc.)

As already explained, in this period, the control part 25 outputs the initial signal Sg0. Further, as shown in FIG. 5A and FIG. 5B, the user brings the first end 11 of the capillary 10 into contact the first liquid L1. Further, the user, by operation with respect to a not shown switch provided in the pipette 1, instructs the pipette 1 to suction the first liquid L1 (time t1).

### (Time t1 to t11: Main Suction Etc.)

When suction of the first liquid L1 is instructed, the control part 25 outputs the suction signal Sg11 for driving the driving part 50 so that the volume of the pressure chamber 21 increases. The suction signal Sg11 is for example a signal that rises from the potential V0 of the initial signal Sg0 up to the predetermined potential V1 and maintains the potential V1. That is, the suction signal Sg11 includes a rising signal Sg111 which rises from the potential V0 to the potential V1 and a maintaining signal Sg112 maintaining the potential V1. Further, by increase of the volume of the pressure chamber 21 by the rising signal Sg111, as shown in FIG. 5C, the first liquid L1 is suctioned into the capillary 10.

### (Time t11 to t12: Brake Etc.)

When the control part 25 judges that a predetermined time (time period Tp) has passed from the start of output of the suction signal Sg11, the control part 25 outputs the brake signal Sg12 for driving the driving part 50 so that the volume of the pressure chamber 21 is reduced. The brake signal Sg12 is for example a signal that falls from the potential V1 of the suction signal Sg11 to a predetermined potential V2 and maintains the potential V2. That is, the brake signal Sg12 includes a falling signal Sg121 falling from the potential V1 to the potential V2 and a maintaining signal Sg122 maintaining the potential V2 in that order. By the brake signal Sg12, the precision of the measurement of the first liquid L1 can be improved and/or suction of a very small amount of the first liquid L1 is possible. Specifically, this is as follows.

In general, when the potential given to the actuator 40 changes from the potential V0 to the potential V1, the volume of the pressure chamber 21 changes from a volume corresponding to the potential V0 (first pre-suction volume) to a volume corresponding to the potential V1 (first post-suction volume) following the change of the potential with a very small delay. Further, in general, if the volume of the pressure chamber 21 changes (increases) from the first pre-suction volume to the first post-suction volume, it is considered that, following this volume change with a very small delay, an amount of the first liquid L1 corresponding to the increase amount of the volume (target suction amount) flows into the capillary 10 and stops. Further, under such thinking, in general, the time after start of suction of the first liquid L1 at the time t1 to separation of the capillary 10 from the first liquid L1 is relatively short (for example 0.5 second to 2 seconds).

However, it was seen as a result of intensive studies by the inventors of the present application that, even after the volume of the pressure chamber 21 became the volume corresponding to the potential V1, the phenomenon arose of flow of the first liquid L1 into the capillary 10 during a relatively long time (for example 30 seconds). As a result of occurrence of such a phenomenon, the liquid separation is carried out during flow of the first liquid L1 into the capillary 10. On the other hand, the time from the start of suction of the first liquid L1 to the liquid separation performed varies among the users. Further, even each user changes the time whenever he or she performs suction of the first liquid L1. As a result, a variation arises in the amount of the first liquid L1 flowing into the capillary 10 until the liquid separation. That is, a variation arises in the suction amount of the first liquid L1.

Therefore, following the suction signal Sg11, the brake signal Sg12 is output to the driving part 50 to reduce the volume of the pressure chamber 21. Due to this, in the capillary 10, the air pressure on the side closer to the second end 12 than the first liquid L1 is raised. By this rise, as indicated by the arrow in FIG. 5D, a force toward the first end 11 side is applied with respect to the first liquid L1 and flow of the first liquid L1 into the capillary 10 is suppressed (including stopped).

As a result, for example, even if a variation arises in the time after the start of suction of the first liquid L1 at the time t1 up to the liquid separation, the amount of the first liquid L1 which flows into the capillary 10 in the time corresponding to the variation is reduced. In turn, influence of the variation of the time up to the liquid separation exerted upon the suction amount (total suction amount from the time t1) is reduced. Further, for example, if the time period Tp after the start of output of the suction signal Sg11 at the time t1 to the start of output of the brake signal Sg12 is made short, the suction amount can be made very small.

Note that, as the factor of the above phenomenon that the first liquid L1 flows into the capillary 10 even after the volume of the pressure chamber 21 becomes the first post-suction volume corresponding to the potential V1, for example, there can be mentioned any of the following two or combination of them. One factor is that the liquid flows into the capillary 10 due to an inertial force of the liquid even after the liquid is suctioned by a suction amount in accordance with the increase amount of the volume of the pressure chamber 21. Another factor is as follows. In contrast to the change of the volume of the pressure chamber 21 following the suction signal Sg11 without generating much of a time delay, the suction amount of the liquid follows to the increase of the volume of the pressure chamber 21 with a time delay

As described above, the output of the brake signal Sg12 is started at a predetermined timing (after the time period Tp passes) with respect to the start of output of the suction signal Sg11. Here, in terms of the internal portion of the control part 25, the time may be measured from a time other than the time of start of the output of the suction signal Sg11 as the starting point and it may be judged whether the time to start the output of the brake signal Sg12 has arrived. For example, in a case where the rising signal Sg111 of the suction signal Sg11 has an inclination (the potential gradually rises), the point of time of start of output of the maintaining signal Sg112 of the suction signal Sg11 may be made the starting point of measurement of time as well. Also in this case, output of the brake signal Sg12 may be started at a predetermined timing with respect to the start of output of the suction signal Sg11 (rising signal Sg111). The same is true for various other timings referred to in the explanation of the present embodiment (from another viewpoint, judgment of elapse of time) .

The user pulls up the capillary 10 from the first liquid L1 during a period where the maintaining signal Sg122 of the brake signal Sg12 is output. Further, the user instructs the pipette 1 to perform additional suction by operation with respect to a not shown switch provided in the pipette 1. The time of the instruction corresponds to the time t12 in FIG. 4.

### (Time t12 to t2: Additional Suction Etc.)

When the additional suction is instructed, the control part 25 outputs an additional suction signal Sg13 for driving the driving part 50 so that the volume of the pressure chamber 21 increases. The additional suction signal Sg13 is for example a signal that rises from the potential V2 of the brake signal Sg12 up to a predetermined potential V3 and maintains the potential V3. That is, the additional suction signal Sg13 includes a rising signal Sg131 which rises from the potential V2 to the potential V3 and a maintaining signal Sg132 for maintaining the potential V3 in that order.

As shown in FIG. 5E, when the first end 11 of the capillary 10 is separated from the liquid, sometimes the first liquid L1 is protruding to the outside of the first end 11. By outputting the additional suction signal Sg13, as shown in FIG. 5F, the first liquid L1 protruding to the outside can be suctioned into the capillary 10.

A potential difference dV3 from the potential V2 to the potential V3 may be set so that for example the increase amount (additional increase amount) of the volume (capacity) of the pressure chamber 21 corresponding to the potential difference dV3 becomes equal to the volume of the first liquid L1 which is protruding out from the first end 11 to the outer side when the first end 11 is pulled up from the remainder of the first liquid L1 after the first end 11 is brought into contact with the first liquid L1 to suction a portion of the first liquid L1 from the first end 11. The term "equal" referred to here means for example that the difference of the volumes of the two may be not more than ±20% or ±10% of the volume of squeezing from the first end 11 to the outside.

During the period where the maintaining signal Sg132 of the additional suction signal Sg13 is output, as already explained, the user brings the capillary 10 into contact with the second liquid L2. Further, the user instructs the pipette 1 to suction the second liquid L2 (time t2) by operation with respect to a not shown switch provided in the pipette 1. Due to this, following the maintaining signal Sg132, the second signal Sg2 is output.

Note that, in FIG. 4, the waveform of the first signal Sg1 is made a waveform formed by a plurality of straight lines such as a rectangular wave. However, part or all of the waveform of the first signal Sg1 may be configured by a curve as well. Further, the waveform of the first signal Sg1 may be made various waveforms different from the illustration (for example a saw tooth, triangular wave, etc.). For example, although not particularly shown, the rising signal Sg111 of the suction signal Sg11 and the falling signal Sg121 of the brake signal Sg12 and/or rising signal Sg131 of the additional suction signal Sg13 may gradually change in potentials linearly or in curves. Further, for example, the suction signal Sg11 may be made a sine wave which changes in phase from 0 up to n/2, and the brake signal Sg12 may be made a sine wave which changes in phase from n/2 up to a predetermined value less than "π" . From another viewpoint, the maintaining signal Sg112 of the suction signal Sg11 may be omitted as well.

The first signal Sg1 was explained, but the second signal Sg2, in the same way as the first signal Sg1, may include a suction signal, brake signal, and additional suction signal in that order. For the second signal Sg2, the maintaining signal Sg132 of the first signal Sg1 and the potential V3 correspond to the initial signal Sg0 and potential V0 for the first signal Sg1. Note that, naturally the values of parameters of various signals may be different between the first signal Sg1 and the second signal Sg2 in accordance with the suction amounts of the first liquid L1 and the second liquid L2 and the like.

The values of the various parameters of the first signal Sg1 may be suitably set in accordance with the dimensions of the capillary 10 and the configuration of the actuator 40 and the like. One example will be explained below. The potential difference dV1 is 2V to 7V. The potential difference dV2 is 1V to 5V (however, less than dV1). The time period Tp is 0.01 second to 1 second.

### [Potential of Brake Signal]

If the value (absolute value, same is true in the following explanation) of the potential difference dV2 from the potential V1 to the potential V2 in the brake signal Sg12 is made large, the braking force becomes strong. Further, if the inclination (ratio of change of potential) of the falling signal Sg121 of the brake signal Sg12 is made steep, the braking force becomes strong. These values of the parameters exerting an influence upon the braking force may be suitably set. In the following explanation, a method of setting the value of the potential difference dV2 in accordance with the waveform of the suction signal Sg11 will be illustrated. Note that, the potential difference dV2, from another viewpoint, is the absolute value of the reduction amount from the first post-suction volume corresponding to the potential V1 to the post-braking volume corresponding to the potential V2 in the pressure chamber 21. The magnitude of this potential difference dV2 may be for example set in accordance with the waveform of the suction signal Sg11.

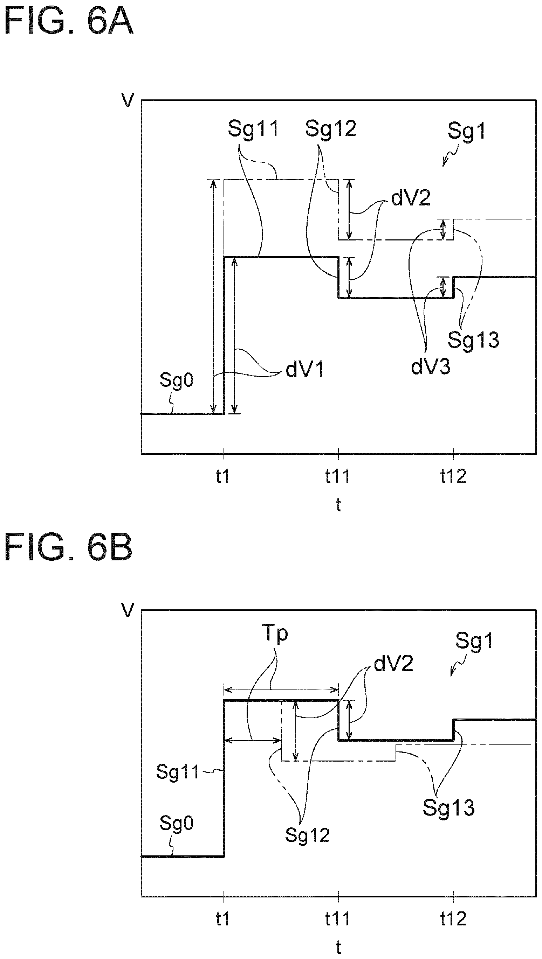

FIG. 6A is a view for explaining an example of the method of setting the potential difference dV2 of the brake signal Sg12 and corresponds to a portion in FIG. 4.

In this example, two types of first signals Sg1 which are different in waveform from each other are shown by a solid line and two-dot chain line. The case where the value of the potential difference dV1 of the suction signal Sg11 (from another viewpoint, the first increase amount from the first pre-suction volume corresponding to the potential V0 to the second post-suction volume corresponding to the potential V2) changes is assumed. In this case, the larger the potential difference dV1, the larger the potential difference dV2. For example, the potential difference dV2 may be given a magnitude obtained by multiplying a predetermined ratio less than 1 with respect to the potential difference dV1. The predetermined ratio may be for example made a value of 60% to 90%.

For example, the larger the potential difference dV1, the larger the flow rate when the first liquid L1 flows into the capillary 10 and/or the inertial force given to the first liquid L1. Accordingly, for example, by making the potential difference dV2 larger the larger the potential difference dV1, the more a greater than expected flow of the first liquid L1 into the capillary 10 can be reduced.

FIG. 6B is a view for explaining another example of the method of setting the potential difference dV2 of the brake signal Sg12 and corresponds to a portion in FIG. 4.

In this example, two types of first signals Sg1 which are different in waveform from each other are shown by a solid line and two-dot chain line. The case where the value of the time period Tp of the suction signal Sg11 (or the maintaining signal Sg112 in the suction signal Sg11) changes is assumed. In this case, the shorter the time period Tp, the larger the potential difference dV2.

For example, the shorter the time period Tp, the smaller the reduction of the flow rate when the liquid flows into the capillary 10 and/or the inertial force given to the first liquid L1. Accordingly, for example, by making the potential difference dV2 larger as the time period Tp is shorter, the more a greater than expected flow of the first liquid L1 into the capillary 10 can be reduced.

Note that, when the values of both of the potential difference dV1 and the time period Tp are changed, naturally the potential difference dV2 may be made larger or smaller in accordance with the changes of values of the two. Further, the value of the potential difference dV1 and the value of the time period Tp may be adjusted, for example, the time period Tp may be made longer when the value of the potential difference dV1 is made larger, so that the value of the potential difference dV2 need not be changed.

Setting of the potential difference dV2 as described above may be carried out by any of a manufacturer, user, and control part 25. For example, concerning the setting of the potential difference dV2, as typical ones, there can be mentioned the following aspects (1) to (3).
(1) In the pipette 1, the values of the potential difference dV1 and the time period Tp are fixed (set by the manufacturer of the pipette 1) . That is, the pipette 1 is produced and sold as equipment which cannot be changed in the suction amount by the user. Further, the manufacturer sets the value of the potential difference dV2 in accordance with the potential difference dV1 and time period Tp.
(2) In the pipette 1, the value of the time period Tp is fixed. The value of the potential difference dV1 is set by the control part 25 in accordance with the target value of the suction amount set by the user through the input part 71. Further, the control part 25 sets the value of the potential difference dV2 in accordance with the set potential difference dV1.
(3) In the pipette 1, the value of the potential difference dV1 is fixed. The value of the time period Tp is set by the control part 25 in accordance with the target value of the suction amount set by the user through the input part 71. Further, the control part 25 sets the value of the potential difference dV2 in accordance with the set time period Tp.

Various aspects other than the above aspects (1) to (3) are possible. For example, the user may be able to directly set the potential difference dV1, the time period Tp and/or the potential difference dV2 through the input part 71. Further, for example, both of the potential difference dV1 and the time period Tp may be adjusted in accordance with the target value of the suction amount set through the input part 71.

The value of the potential difference dV1 and/or the time period Tp may be determined (set) based on the target value of the suction amount by for example a calculation formula or may be determined with reference to a map linking them together. The same is true for determination (setting) of the value of the potential difference dV2 based on the potential difference dV1 and/or the value of the time period Tp. Note that, in the aspect of (2), in terms of the internal portion of the control part 25, the value of the time period Tp which is set by the manufacturer, in the same way as the value of the potential difference dV1, may be handled not as a constant, but as a variable. The same is true for the value of the potential difference dV1 in the aspect of (3).

In the following explanation for the first embodiment, the aspect (2) among the above aspects (1) to (3) will be taken as an example.

### [Block Diagram]

FIG. 7 is a block diagram showing the configuration of a principal part according to a signal processing system of a control unit 24.

The control part 25 for example includes a storage part 72. The storage part 72 stores a first target value D1, a second target value D2, and the value of the time period Tp. The first target value D1 is the target value of the suction amount of the first liquid L1 and is set by operation of the user with respect to the input part 71. The second target value D2 is the target value of the suction amount of the second liquid L2 and is set by operation of the user with respect to the input part 71. The value of the time period Tp is for example set in advance by the manufacturer of the pipette 1. Note that, although not particularly shown, the value of the time period Tp may be made different between the first signal Sg1 and the second signal Sg2 as well.

Further, the control part 25 is for example configured including a CPU, ROM, RAM, and external storage device etc. By the CPU running the program stored in the ROM and/or the external storage device, various function parts (73, 74, 75, and 76) shown in FIG. 7 are constructed. For example, the following function parts are constructed.

The first signal setting part 73 sets the values of parameters of the waveform of the first signal Sg1 (for example potential, change ratio of the potential, and/or time length etc. , same is true hereinafter) based on the information etc. stored in the storage part 72. For example, a dV1 setting part 73a sets the value of the potential difference dV1 of the suction signal Sg11 based on the first target value D1. A dV2 setting part 73b sets the value of the potential difference dV2 of the brake signal Sg12 based on the potential difference dV1 set by the dV1 setting part 73a.

The second signal setting part 74 sets the values of parameters of the waveform of the second signal Sg2 based on the information etc. stored in the storage part 72. For example, although the illustration is omitted, the second signal setting part 74, in the same way as the first signal setting part 73, has a dV1 setting part and a dV2 setting part and uses the second target value D2 in place of the first target value D1 to set the values of the potential difference dV1 and the potential difference dV2. Further, for example, the second signal setting part 74 adjusts the height of the potential of the entire waveform of the second signal Sg2 based on the potential of the first signal Sg1 set by the first signal setting part 73.

The third signal setting part 75 sets the values of parameters of the waveform of the third signal Sg3 based on the information etc. stored in the storage part 72. For example, the third signal setting part 75 adjusts the height of the potential of the entire waveform of the third signal Sg3 stored in the storage part 72 based on the potential of the second signal Sg2 set by the second signal setting part 74. The third signal setting part 75 may adjust the amplitude of the vibration in accordance with the first target value D1 and the second target value D2 as well.

The signal control part 76 generates and outputs various signals included in the drive signal SgA based on the values of parameters of the waveforms set by the various types of signal setting parts described above or based on input with respect to the input part 71 (in the present embodiment, operation by the user) . From another viewpoint, the signal control part 76 controls the start of output of various signals included in the drive signal SgA, continuance of the output, and the end of the output.

### [Flow Chart]

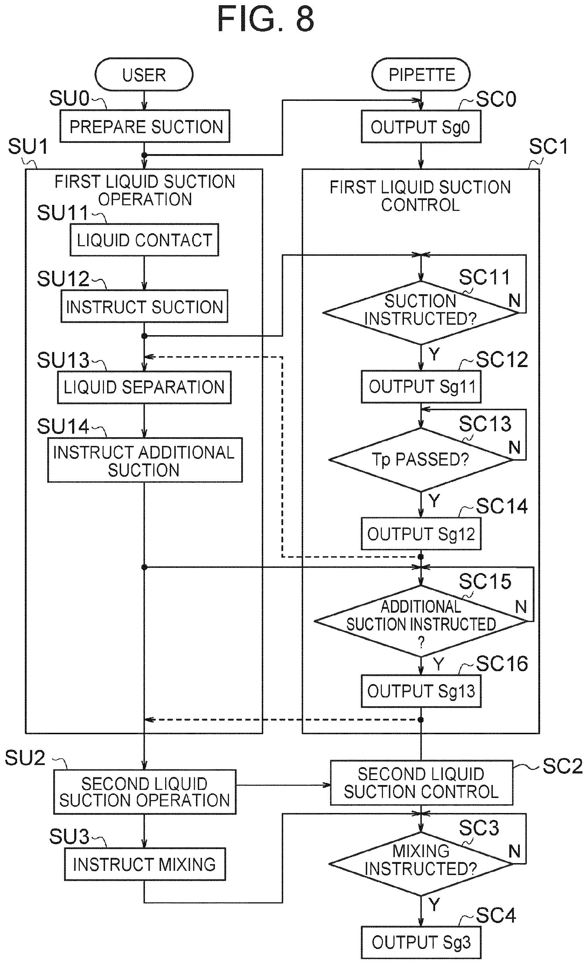

FIG. 8 is a flow chart showing an example of the routine of the processing carried out by the user and the control part 25 in order to realize the operation explained up to here. Steps SU0 to SU3 on the left side on the drawing sheet show the processing carried out by the user. Steps SC0 to SC4 on the right side on the drawing sheet show the processing performed by the control part 25.

At step SU0, the user prepares for suction such as turning a not shown power supply switch of the pipette 1 to ON. On the other hand, when the ON operation of the power supply switch or another operation is carried out, the control part 25 starts the output of the initial signal Sg0 (step SC0).

At step SU1 (steps SU11 to SU14), the user performs an operation on the pipette 1 for suction the first liquid L1. Further, in response to this operation, the control part 25 performs the control for suction the first liquid L1 (step SC1).

Specifically, first, the user brings the first end 11 of the capillary 10 into contact with the first liquid L1 (step SU11) . Next, the user instructs the pipette 1 to suction the first liquid L1 by operation with respect to the input part 71 (step SU12).

On the other hand, the control part 25 continues the output of the initial signal Sg0 from step SC0. Further, at step SC11, the control part 25 judges whether suction of the first liquid L1 is instructed based on the signal from the input part 71. Further, in the case of a negative judgment, the control part 25 continues the output of the initial signal Sg0, while in the case of a positive judgment, the control part 25 proceeds to step SC12.

At step S12, the control part 25 starts the output of the suction signal Sg11 of the first signal Sg1. At step SC13, the control part 25 judges whether the time period Tp has passed from the start of output of the suction signal Sg11. Further, the control part 25 continues the output of the suction signal Sg11 in the case of negative judgment, while proceeds to step SC14 in the case of positive judgment. At step SC14, the control part 25 starts the output of the brake signal Sg12 of the first signal Sg1.

After performing the operation of instructing suction with respect to the input part 71 at step SU12, the user judges whether suction of the first liquid L1 (steps SC11 to SC14) is completed based on the elapse of time and/or visual observation of the capillary 10. Further, when judging the completion, the user pulls the capillary 10 up from the first liquid L1 (step SU13). After that, the user performs the operation with respect to the input part 71 of instructing additional suction shown in FIG. 5E and FIG. 5F (step SU14).

On the other hand, the control part 25 continues the output of the brake signal Sg12 (maintaining signal Sg122) from step SC14. Further, at step SC15, the control part 25 judges whether the additional suction is instructed based on the signal from the input part 71. Further, the control part 25 continues the output of the brake signal Sg12 in the case of negative judgment, while proceeds to step SC16 in the case of positive judgment. At step SC16, the control part 25 starts the output of the additional suction signal Sg13 of the first signal Sg1.

After performing the operation of instructing the additional suction with respect to the input part 71 at step SU14, the user judges whether the additional suction of the first liquid L1 (step SC16) is completed based on the elapse of time and/or visual observation of the capillary 10. Further, when judging completion, the user performs the operation for suction the second liquid L2 (step SU2).

The operation by the user for suction the second liquid L2 (step SU2) and the control by the control part 25 (step SC2) corresponding to this operation are basically the same as the operation by the user for suction the first liquid L1 (step SU1) and the control (SC1) by the control part 25 corresponding to this operation. However, in contrast to the fact that the output of the initial signal Sg0 was continued at the time of start of step SC1, at the time of start of step SC2, the output of the maintaining signal Sg132 of the additional suction signal Sg13 is continued.

At step SU3, the user performs the operation of instructing mixing of the first liquid L1 and the second liquid L2 with respect to the input part 71. On the other hand, the control part 25 continues the output of the maintaining signal of the additional suction signal of the second signal Sg2 (see the maintaining signal Sg132 of the additional suction signal Sg13 of the first signal Sg1) from step SC2. Further, at step SC3, the control part 25 judges whether mixing is instructed based on the signal from the input part 71. Further, the control part 25 continues the output of the second signal Sg2 in the case of negative judgment while proceeds to step SC4 in the case of positive judgment. At step SC4, the control part 25 outputs the third signal Sg3.

As explained above, the pipette 1 according to the present embodiment has the capillary 10, the pressure chamber 21, the driving part 50, and the control part 25. The capillary 10 is opened in the first end 11 and the second end 12 which form the two ends in the longitudinal direction. The pressure chamber 21 is communicated through the second end 12 with the internal portion of the capillary 10. The driving part 50 changes the volume of the pressure chamber 21. The control part 25 outputs the first signal Sg1 for driving the driving part 50 so that the volume of the pressure chamber 21 increases and the first liquid L1 is suctioned from the first end 11. The first signal Sg1 includes the suction signal Sg11 and the brake signal Sg12. The suction signal Sg11 drives the driving part 50 so that the volume of the pressure chamber 21 increases from the first pre-suction volume (corresponding to the potential V0) before the suction of the first liquid by the first increase amount (increase amount corresponding to the potential difference dV1) to become the first post-suction volume (volume corresponding to the potential V1). The brake signal Sg12 is output continuing from to the suction signal Sg11 and drives the driving part 50 so that the volume of the pressure chamber 21 is reduced from the first post-suction volume (volume corresponding to the potential V1) by a reduction amount (reduction amount corresponding to the potential difference dV2) having a smaller absolute value than the first increase amount (increase amount corresponding to the potential difference dV1) to become the post-braking volume (volume corresponding to the potential V2).

Further, from another viewpoint, the liquid collection method according to the present embodiment uses the pipette 1. The pipette 1 has the capillary 10 which is opened in the first end 11 and the second end 12 forming the two ends in the longitudinal direction, the pressure chamber 21 which is communicated through the second end 12 with the internal portion of the capillary 10, and the driving part 50 which changes the volume of the pressure chamber 21. Further, the liquid collection method has the liquid contact step, suction step, liquid separation step, and brake step. The liquid contact step (SU11) brings the first end 11 into contact with the liquid (the first liquid L1). The suction step (SC12) is increases the volume of the pressure chamber 21 by the driving part 50 in the state where the first end 11 is made to contact the first liquid L1 and thereby suction the first liquid L1 from the first end 11 into the capillary 10. The liquid separation step (SU13) separates the first end 11 from the remainder of the first liquid L1 after a portion of the first liquid L1 is suctioned into the capillary 10. The brake step (SC14) is reduces the volume of the pressure chamber 21 by the driving part 50 after the suction step (SC12) and before the liquid separation step (SU13).

Accordingly, as already explained, the flow of the first liquid L1 into the capillary 10, especially the flow after the volume of the pressure chamber 21 becomes a volume corresponding to the potential V1, can be suppressed by the brake signal Sg12. As a result, for example, the influence of variation of the timing of the liquid separation exerted upon the suction amount is reduced and in turn the precision of measurement is improved. Further, for example, by making the time period Tp short, suction of a very small amount becomes possible. Note that, the brake signal Sg12 is output following the suction signal Sg11 and the potential difference dV2 thereof is smaller than the potential difference dV1 of the suction signal Sg11, therefore it is differentiated from the signal for making the pipette eject the liquid therefrom after moving the pipette suction the liquid.

The control part 25 generates the first signal Sg1 so that the larger the first increase amount (increase amount corresponding to the potential difference dV1) of the volume of the pressure chamber 21 by the suction signal Sg11, the larger the absolute value of the reduction amount (reduction amount corresponding to the potential difference dV2) of the volume of the pressure chamber 21 according to the brake signal Sg12.

In this case, for example, as explained with reference to FIG. 6A, the larger the flow rate and/or the inertial force of the first liquid L1 flowing into the capillary 10, the larger the braking force. As a result, for example, even in a case where the first increase amount changes, the effect of suppression of the flow of the first liquid L1 into the capillary 10 can be stably obtained.

Further, in the present embodiment, the pipette 1 has the storage part 72 for storing the first target value D1 of the suction amount in the first liquid L1 from the first end 11. The control part 25 generates the first signal Sg1 so that the larger the first target value D1, the larger the first increase amount (increase amount corresponding to the potential difference dV1) of the volume of the pressure chamber 21.

In this case, for example, the suction amount of the first liquid L1 is prescribed according to the first increase amount of the volume of the pressure chamber 21. Further, the brake signal contributes to reduction of variation of the suction amount caused by variation of timing of the liquid separation.

In the present embodiment, the first signal Sg1 includes the additional suction signal Sg13 for driving the driving part 50 so that the volume of the pressure chamber 21 increases from the post-braking volume (volume corresponding to the potential V2) by the additional increase amount (increase amount corresponding to the potential difference dV3) to become the first completion volume (volume corresponding to the potential V3) . The additional increase amount (increase amount corresponding to the potential difference dV3) is equal to the volume of the first liquid L1 protruding from the first end 11 to the outside when pulling up the first end 11 from the remainder of the first liquid L1 after bringing the first end 11 into contact with the first liquid L1 and suction a portion of the first liquid L1 from the first end 11.

Accordingly, as explained with reference to FIG. 5E and FIG. 5F, the volume of the first liquid L1 which protrudes from the first end 11 can be reduced. In the present embodiment, the flow of the first liquid L1 into the capillary 10 is suppressed due to the brake signal Sg12. Therefore, when the liquid is separated after that, compared with an aspect where flow of the first liquid L1 into the capillary 10 is not suppressed, the volume of protrusion is liable to increase. Accordingly, the additional suction signal Sg13 is effective in combination with the brake signal Sg12. Further, as a result of reduction of protrusion, for example, the liability that dust etc. will contact the first liquid L1 in the middle of movement of the pipette 1 which suctioned the first liquid L1 is reduced. Further, for example, the liability that the portion in the first liquid L1 which protruded from the first end 11 will be dispersed into the second liquid L2 when making the first end 11 contact the second liquid L2 can be reduced.

The pipette 1 further has the input part 71 which receives at least one of the input of operation by the user and the input of the signal by the external apparatus. The output of the suction signal Sg11 is started (steps SC11 and SC12) triggered by the first input with respect to the input part 71 (step SU12) . The brake signal Sg12 is output (steps SC13 and SC14) in place of the suction signal Sg11 at a timing determined in advance with respect to the start of output of the suction signal Sg11.

Accordingly, for example, compared with the aspect where the brake signal Sg12 is output due to the operation of the user with respect to a not shown switch (this aspect is also included in the art according to the present disclosure), the time period Tp can be made short and/or can be measured with a high precision. As a result, the effect of making the suction amount very small and/or reducing variation is improved.

Further, in the present embodiment, the output of the brake signal Sg12 is suspended (steps SC15 and SC16) triggered by input with respect to the input part 71 (step SU14). Between the first input and the input for suspension described above (between step SU12 and step SU14), each of the increase (increase according to the potential difference dV1) and reduction (reduction according to the potential difference dV2) of the volume of the pressure chamber 21 occurs only one time.

Accordingly, for example, the waveforms formed by the suction signal Sg11 and brake signal Sg12 are simple. As a result, for example, it is easy to grasp the relationship between the waveform and the suction amount. In turn, setting the values of the parameters of the waveforms is easy.

Further, in the present embodiment, the first signal Sg1 includes a first stand-by signal (maintaining signal Sg132 of the additional suction signal Sg13) for driving the driving part 50 so that the volume of the pressure chamber 21 maintains the first completion volume (volume corresponding to the potential V3) which is not less than the post-braking volume (volume corresponding to the potential V2). The control part 25 is triggered by the second input which is applied with respect to the input part 71 (step SU2, in more detail, the same operation as step SU12 at step SU1) after the first input (step SU12) and outputs the second signal Sg2 for driving the driving part 50 in place of the maintaining signal Sg132 of the additional suction signal Sg13 so that the volume of the pressure chamber 21 increases from the first completion volume (potential V3) and the second liquid is suctioned from the first end 11.

Accordingly, for example, in the state where the first liquid L1 is held at the first end 11, the second liquid L2 can be suctioned from the first end 11. Further, as described above, in the case where the additional suction signal Sg13 is combined with the brake signal Sg12, protrusion of the first liquid L1 from the first end 11 is reduced and in turn the liability of dispersion of the first liquid L1 into the second liquid L2 when making the first end 11 contact the second liquid L2 is reduced. As a result, for example, the mixing ratio of the first liquid L1 and the second liquid L2 can be made correct. Further, for example, in a case where suction is repeatedly carried out from the stored second liquid L2, the liability of the first liquid L1 being mixed into the second liquid L2 as an impurity is reduced.

Further, in the present embodiment, the second signal Sg2 includes a second stand-by signal (see the maintaining signal Sg132 of the first signal Sg1) for maintaining the volume of the pressure chamber 21 at the second completion volume (the volume substantially corresponding to the potential V4 in FIG. 2) which is larger than the first completion volume (volume corresponding to the potential V3) . The control part 25 is triggered by the third input which is applied with respect to the input part 71 (step SU3) after the second input (step SU2, in more detail, the same operation as step SU12 at step SU1) and outputs the third signal Sg3 for driving the driving part 50 in place of the second signal Sg2 so that the volume of the pressure chamber 21 increases from the second completion volume (potential V4), then repeatedly increases and decreases.

Accordingly, for example, the first liquid L1 which was correctly measured by using the brake signal Sg12 can be mixed with the other liquid (the second liquid L2).

### <Second Embodiment>

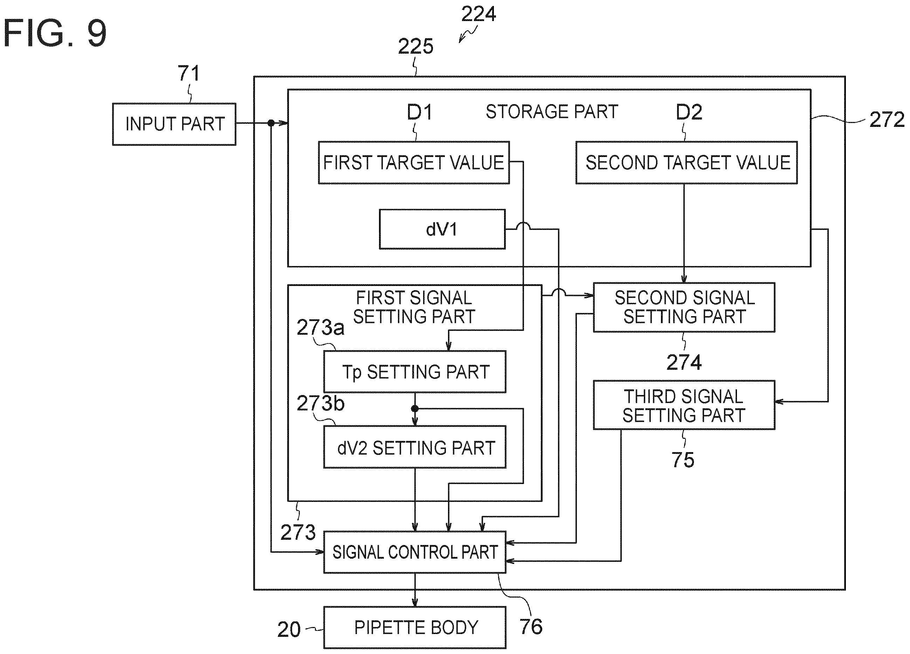

FIG. 9 is a block diagram showing the configuration of a principal part according to a signal processing system of a control unit 224 provided in a pipette according to a second embodiment and corresponds to FIG. 7.

In the explanation of the first embodiment, among the aspects (1) to (3) which were explained with reference to FIG. 6A and FIG. 6B, the aspect of (2) was taken as an example. In the explanation of the second embodiment, the aspect of (3) is taken as an example. Along with this, the block diagram of a control part 225 according to the second embodiment differs from the block diagram of the control part 25 according to the first embodiment.

Specifically, first, the storage part 272 stores not the value of the time period Tp, but the value of the potential difference dV1 as the value which is set in advance by the manufacturer of the pipette 1. Note that, although not particularly shown, the value of the potential difference dV1 may be made different between the first signal Sg1 and the second signal Sg2 as well.

Further, a first signal setting part 273 has a Tp setting part 273a in place of the dV1 setting part 73a in the first embodiment. The Tp setting part 273a sets the time period Tp based on the first target value D1. Further, a dV2 setting part 273b sets the value of the potential difference dV2 of the brake signal Sg12 based on the time period Tp set by the Tp setting part 273a unlike the dV2 setting part 73b in the first embodiment.

The different portion of a second signal setting part 274 relative to the second signal setting part 74 in the first embodiment is basically the same as the difference of the first signal setting part 273 relative to the first signal setting part 73 in the first embodiment.

As explained above, in the present embodiment, as shown in FIG. 4, the suction signal Sg11 includes the maintaining signal Sg112 for driving the driving part 50 so that the volume of the pressure chamber 21 is maintained at the first post-suction volume (volume corresponding to the potential V1) during the time period Tp. The brake signal Sg12 is output following the maintaining signal Sg112. The control part 225 generates the first signal Sg1 so that the shorter the time period Tp, the larger the absolute value of the reduction amount (reduction amount corresponding to the potential difference dV2) of the volume of the pressure chamber 21 according to the brake signal Sg12.

Accordingly, for example, as explained with reference to FIG. 6B, the shorter the time until the start of the brake signal Sg12 and in turn the larger the flow rate and/or inertial force of the first liquid L1 flowing into the capillary 10, the larger the braking force. As a result, for example, even in a case where the time period Tp changes, the effect of suppression of flow of the first liquid L1 into the capillary 10 can be stably obtained.

Further, in the present embodiment, the pipette 1 has a storage part 272 for storing the first target value D1 of the suction amount of the first liquid L1 from the first end 11. The control part 225 generates the first signal Sg1 so that the smaller the first target value D1, the shorter the time period Tp.

In this case, for example, the suction amount of the first liquid L1 is prescribed according to the time (time period Tp) for permitting flow of the first liquid L1 into the capillary 10 (in particular, flow after the volume of the pressure chamber 21 becomes the first post-suction volume) . That is, a new measurement method is provided. This measurement method utilizes the flow after the volume of the pressure chamber 21 becomes the first post-suction volume and is epoch-making. Further, from the principle of utilizing the flow, which becomes a factor of error, for the measurement, variation of the suction amount is suppressed. Further, by making the time period Tp short, a very small suction amount, which has been conventionally impossible, becomes possible.

### <Third Embodiment>

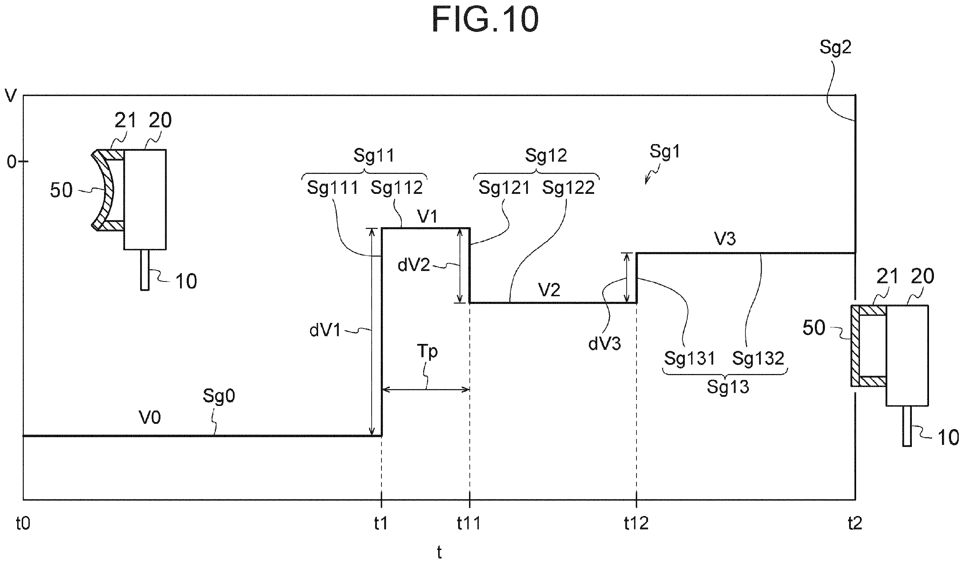

FIG. 10 is a view showing the drive signal SgA of a pipette according to a third embodiment and corresponds to FIG. 4.

In the first embodiment, the case where the potential V0 of the initial signal Sg0 was the reference potential (0 on the ordinate) was taken as an example. On the other hand, in the present embodiment, a case where the potential V0 is lower than the reference potential is taken as an example.

As already explained, in the explanation of the embodiment, the case where the direction from the electrode given the drive signal SgA to the electrode given the reference potential between the internal electrode 42 and the surface electrode 44, and the polarization direction of the piezoelectric ceramic layer 40a are reverse orientations is taken as an example. In other words, the rise of the potential of the drive signal SgA corresponds to the increase of the volume of the pressure chamber 21. Accordingly, in the present embodiment, as substantially shown on the top left on the drawing sheet in FIG. 10, when the initial signal Sg0 is being output, the driving part 50 flexes to the pressure chamber 21 side due to the potential V0 of the initial signal Sg0 being lower than the reference potential. Further, if the potential rises by output of the first signal Sg1, the flexural deformation of the driving part 50 is reduced and the volume of the pressure chamber 21 is increased.

The relative relationships between the reference potential and the waveform of the drive signal SgA may be suitably set. From another viewpoint, a specific value of the potential V0 may be suitably set. In the example shown, a case where the drive signal SgA goes up and crosses the reference potential in the middle of the first rise of the second signal Sg2 is illustrated. At the time of zero up-cross, as substantially shown on the right side on the drawing sheet in FIG. 10, the driving part 50 basically does not cause flexural deformation. Further, when the potential of the drive signal SgA further rises, although not particularly shown, the driving part 50 flexes to the opposite side to the pressure chamber 21.

Note that, unlike the example shown, the drive signal SgA may go up and cross zero in the middle of the first signal Sg1, may go up and cross zero in the middle of the second signal, or may go up and cross zero at the rise of the air suction signal Sg31 of the third signal Sg3. Further, a zero down-cross may occur in these signals as well. Further, although not particularly shown, the potential at the lower limit of the restoration signal Sg32 of the third signal Sg3 and/or the potential at the lower limit of the mixing signal Sg33 may be lowered to a potential V0 which is lower than the reference potential or may fall to the reference potential.

Usually, when the potential V0 is the reference potential, flexural deformation is not caused in the driving part 50. In turn, the potential V0 making the driving part 50 (inner surface of the pressure chamber 21) flex to the inner side is not the reference potential. However, in an aspect where the inner surface of the pressure chamber 21 flexes when the potential V0 is the reference potential, the potential V0 making the inner surface of the pressure chamber 21 flex to the inner side is sometimes the reference potential.

As explained above, in the present embodiment, the driving part 50 forms a portion of the inner surface of the pressure chamber 21 and changes the volume of the pressure chamber 21 due to the flexural deformation of the inner surface. Before the output of the first signal Sg1, the control part 25 (or 225) outputs the initial signal Sg0 for driving the driving part 50 so that the volume of the pressure chamber 21 becomes the first pre-suction volume (volume corresponding to the potential V0). The initial signal Sg0 is a signal making the inner surface flex toward the inner side of the pressure chamber 21.

Accordingly, for example, compared with the first embodiment, the volume of the pressure chamber 21 when performing the same step (for example suction of the first liquid L1) is reduced. As a result, for example, variation of the suction amount is reduced. The reason for that may be for example the fact that the gas (for example air) in the pressure chamber 21 is a compressive fluid and exerts an influence upon suction of the liquid, but the amount of the gas is reduced.

### <Experiments>

### [Variation of Suction Amount]

As already explained, due to the brake signal Sg12 being output, for example, variation of the suction amount is reduced. The effect was confirmed by experiments. Note that, in the following explanation, "σ" indicates a standard deviation, and "CV" indicates a fluctuation coefficient.

### (Experiment 1)

A pipette 1 according to the embodiment was actually prepared, and liquid was suctioned by the output of the first signal Sg1. Further, after the output of the brake signal Sg12, the suction amount of the liquid at the time of liquid separation (after step SU13 and before step SU14) was measured. Further, a pipette according to a comparative example was prepared, and the same experiment was carried out. In the pipette according to the comparative example, as the first signal, only the suction signal Sg11 was output (the brake signal Sg12 was not output), and the maintaining signal Sg112 of the suction signal Sg11 was maintained up to after liquid separation.

The suction and measurement of the suction amount as described above were carried out 10 times for each of the pipette according to the working example and the pipette according to the comparative example. The time from the start of output of the first signal to the liquid separation (from step SU12 to step SU13) was suitably set so as to vary in 10 cycles of suction and measurement. The values of the parameters of the first signal Sg1 were potential V0=reference potential, potential V1=3.5V, potential V2=2.2V, and time period Tp=0.1 second. The first signal Sg1 was made a rectangular wave.

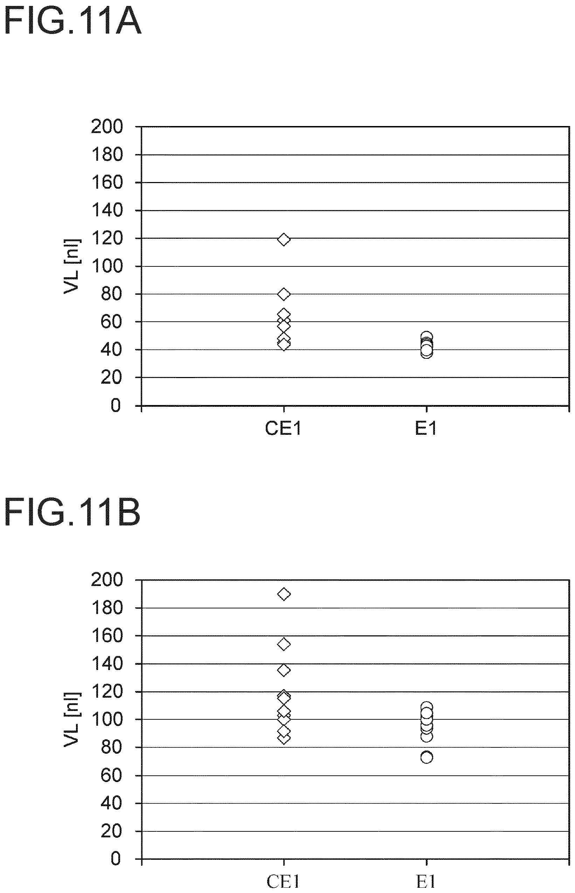

FIG. 11A is a graph showing the results of experiments. On the abscissa in this graph, CE1 indicates a comparative example, and E1 indicates a working example. The ordinate shows the suction amount VL(nl). Further, the suction amounts measured in the comparative example and the working example are plotted.

As shown in this graph, the suction amount of the pipette in the working example becomes small in variation compared with the suction amount of the pipette in the comparative example. The effect of the brake signal Sg12 could be confirmed from this result. Note that, numerical values indicating the measurement results of the suction amount will be shown below.
Suction Amount in example
   Mean value = 42.6 nl, σ=3.2 nl, CV=7.5%
Suction Amount in comparative example
   Mean value = 60.7 nl, σ=23.7 nl, CV=39.0%

### (Experiment 2)

Under the same conditions as experiment 1, not only suction of the first liquid L1, but also suction of the second liquid L2 was carried out, and the suction amounts of the liquids at the time of the liquid separation (the time when, at step SU2, the step corresponding to step SU13 at step SU1 was carried out) were measured. Note that, for the second signal Sg2, the maintaining signal Sg132 of the additional suction signal Sg13 of the first signal Sg1 corresponds to the initial signal Sg0 for the first signal Sg1. The portion other than this in the waveform of the second signal Sg2 is the same as the waveform of the first signal Sg1.

FIG. 11B is a graph the same as FIG. 11A showing the results of the experiment. As shown in this graph, the suction amount of the pipette in the working example becomes smaller in variation compared with the suction amount of the pipette in the comparative example. The effect of the brake signal Sg12 could be confirmed from this result. Note that, numerical values indicating the results of measurement of the suction amount will be shown below.
Suction Amount in working example
   Mean value = 91.1 nl, σ=13.9 nl, CV=15.2%
Suction Amount in comparative example
   Mean value = 119.8 nl, σ=31.9 nl, CV=26.6%

### [Setting of Suction Amount by Time Period Tp]

As already explained, by using the brake signal Sg12, the suction amount can be prescribed by the time period Tp from the start of the output of the suction signal Sg11 up to the start of the output of the brake signal Sg12. This was confirmed according to experiments.

Specifically, under substantially the same conditions as experiment 1, for the pipette according to the working example, after the output of the brake signal Sg12, the suction amount of the liquid at the time of the liquid separation (after step SU13 and before step SU14) was measured. However, here, the time period Tp was made any of three types of values of 0.1 second, 0.5 second, and 1.0 second. Further, for each of the values of the time period Tp, 10 cycles of suction and measurement were carried out.

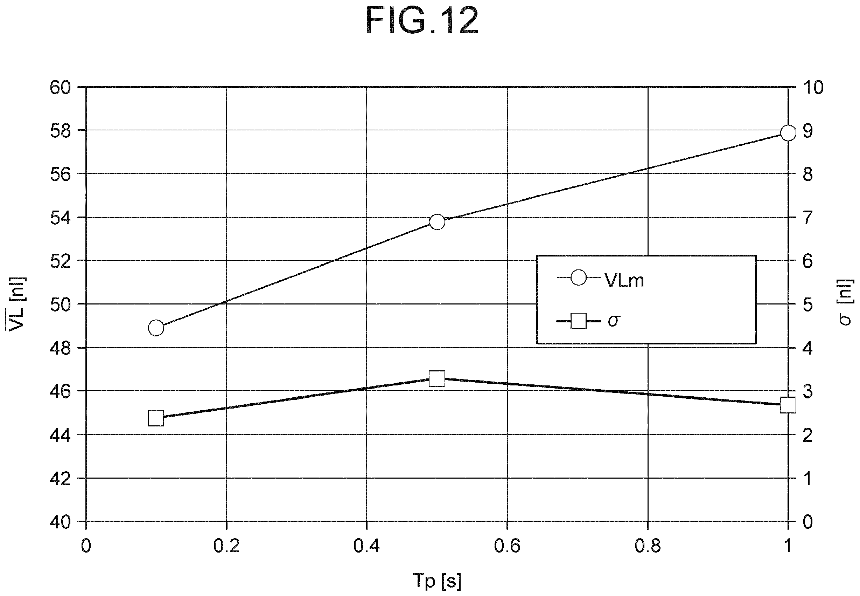

FIG. 12 is a graph showing the results of experiment. The abscissa in this graph shows the time period Tp. The ordinate on the left side on the drawing sheet shows the mean value of the suction amount VL(nl) . The ordinate on the right side on the drawing sheet shows σ(nl) of the suction amount VL. The circular plots (VLm) show the relationship between the time period Tp and the mean value of the suction amount. The rectangular plots (σ) show the relationship between the time period Tp and "σ".

As shown in this graph, the longer the time period Tp, the larger the suction amount VL. It could be confirmed from the result that, for example, new measurement for prescribing the suction amount according to the time period Tp was possible. Further, it could be confirmed that no large difference in variation arose even if the time period Tp was changed.

### [Reduction of Variation Due to Reduction of Volume of Pressure Chamber]

As explained in the third embodiment, by setting the potential V0 of the initial signal Sg0 so that the driving part 50 flexes toward the pressure chamber 21 side by the initial signal Sg0, variation of the suction amount can be reduced. This was confirmed from experiments.

Specifically, under substantially the same conditions as experiment 1, for the pipette according to the working example, after the output of the brake signal Sg12, the suction amount of the liquid at the time of liquid separation (after step SU13 and before step SU14) was measured. However, here, the potential V0 was set to three types of different values, and the suction and the measurement of suction amount was carried out 10 times for each of the values. The three types of values of the potential V0 were made the values falling into a range where a difference of volume of the pressure chamber 21 was not more than 1.5 µl.

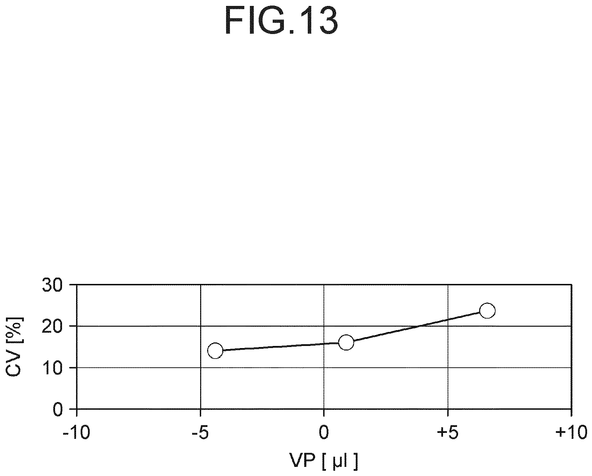

FIG. 13 is a graph showing the results of experiment. The abscissa in this graph shows the volume VP (µl) of the pressure chamber 21 when the initial signal Sg0 is being output. The ordinate shows the CV (%) of the suction amount. Note that, the volume VP of the pressure chamber 21 is indicated by a relative value using the mean value as a reference. As shown in this graph, the smaller the volume VP, the smaller the CV of the suction amount.

Note that, in the above embodiments, the volume corresponding to the potential V0 in the pressure chamber 21 is one example of the first pre-suction volume. The amount of change of the volume corresponding to the potential difference dV1 is one example of the first increase amount. The volume corresponding to the potential V1 is one example of the first post-suction volume. The volume corresponding to the potential V2 is one example of the post-braking volume. The amount of change of the volume corresponding to the potential difference dV2 is one example of the reduction amount from the first post-suction volume to the post-braking volume. The volume corresponding to the potential V3 is one example of the first completion volume. The amount of change of the volume corresponding to the potential difference dV3 is one example of the additional increase amount. The operation at step SU12 is one example of the first input. The maintaining signal Sg132 of the additional suction signal Sg13 is one example of the first stand-by signal. The operation at step SU2 (in more detail, at step SU2, the operation corresponding to step SU12 at step SU1) is one example of the second input. The volume corresponding to the potential V4 (in more detail, in the second signal Sg2, the potential corresponding to the potential V3 of the first signal Sg1) is one example of the second completion volume. The second signal Sg2 (in more detail, in the second signal Sg2, the signal corresponding to the maintaining signal Sg132 of the additional suction signal Sg13 of the first signal Sg1) is one example of the second stand-by signal. The operation at step SU3 (in more detail, the operation with respect to the pipette 1 at the time t3) is one example of the third input. Step SC12 is one example of the suction step. Step SC14 is one example of the brake step.

The art according to the present disclosure is not limited to the above embodiments and modifications and may be work in various ways.

The embodiments explained above may be suitably combined. For example, the control part 25 may set (change) the values of both of the potential difference dV1 and the time period Tp of the first signal Sg1 based on the target value of the suction amount set by the user (target value stored in the storage part 72) . Further, the control part 25 may set the values of the parameters (for example potential difference dV2) for prescribing the waveform of the second signal Sg2 based on these potential difference dV1 and time period Tp.

The pipette is not limited to one capable mixing the two liquids. For example, the pipette may be one which suctions one liquid and ejects the one liquid to a place different from the original place as well. Further, the pipette may be one capable suction three or more liquids.

The first signal Sg1 need not include the additional suction signal Sg13 either. That is, at the time when the maintaining signal Sg122 of the brake signal Sg12 is being output, the separation from the first liquid L1 and the contact with the second liquid L2 may be carried out and the output of the second signal Sg2 may be started. From another viewpoint, the second signal Sg2 may rise from the potential V2 of the maintaining signal Sg122 of the brake signal Sg12 of the first signal Sg1. Note that, in this case, the maintaining signal Sg122 is one example of the first stand-by signal. The first signal Sg1 may be different from the present embodiment and be one for repeating the suction and braking to suction the first liquid L1.

The third signal Sg3 need not include the restoration signal Sg32 either. That is, at the time when the air suction signal Sg31 is being output, opening and closing of the valve 23 need not be carried out, but may be followed by the output of the mixing signal Sg33. That is, restoration of the pressure chamber 21 need not be carried out either. In this case, the valve 23 need not be provided either.

The trigger of the start of output or suspension of output of the signal (including one along with switching of the signals) may be suitably set. For example, switching from the air suction signal Sg31 to the restoration signal Sg32 and/or switching from the restoration signal Sg32 to the mixing signal Sg33 may be carried out using not judgment by measurement of time by the control part 25, but input with respect to the input part 71 as the trigger. Further, for example, the control part 25 may start the output of the third signal when judging that a predetermined time has passed after the input instructing suction of the second liquid L2 (after the input instructing additional suction when additional suction is carried out for the second liquid L2) as well.

### Reference Signs List

1... pipette, 10...capillary, 11... first end, 12... second end, 21... pressure chamber, 25... control part, 50... driving part, Sg1... first signal, Sg11... suction signal, and Sg12... brake signal.

## Claims

1. A pipette (1), comprising:
a capillary (10) opened in a first end (11) and a second end (12) which form two ends in a longitudinal direction;
a pressure chamber (21) opened into an internal portion of the capillary (10) through the second end (12) of an internal portion of the capillary (10);
a driving part (50) being an actuator (40) configured to deform according to an electrical signal output by a control part (25) and thereby change a volume of the pressure chamber (21); and
the control part (25) which is configured to control the driving part (50), wherein
the control part (25) is configured to output an electrical first signal (Sg1) driving the driving part (50) so that the volume of the pressure chamber (21) increases and a first liquid (L1) is suctioned from the first end (11),
the first signal (Sg1) includes
a suction signal (Sg11) driving the driving part (50) so that the volume of the pressure chamber (21) increases from a first pre-suction volume before suction of the first liquid (L1) to a first post-suction volume by a first increase amount,
**characterized in that**
the first signal (Sg1) further includes
a brake signal (Sg12) driving the driving part (50) so that the volume of the pressure chamber (21) is reduced, by the driving part (50), from the first post-suction volume to a post-braking volume by a reduction amount having a smaller absolute value than the first increase amount, the brake signal (Sg12) being output following the suction signal (Sg11), and
the control part (25) is configured to generate the first signal (Sg1) so that the larger the first increase amount, the larger the absolute value of the reduction amount.

2. The pipette (1) according to claim 1, wherein
the suction signal (Sg11) includes a maintaining signal (Sg112) driving the driving part (50) so that the volume of the pressure chamber (21) is maintained at the first post-suction volume for a predetermined time period (Tp),
the brake signal (Sg12) is output following the maintaining signal (Sg112), and
the control part (25) is configured to generate the first signal (Sg1) so that the shorter the time period (Tp), the larger the absolute value of the reduction amount.

3. The pipette (1) according to claim 1 or 2,
wherein the control part (25) includes a storage part (72) which is configured to store a target value of a suction amount of the first liquid (L1) from the first end (11), and
the control part (25) is configured to generate the first signal (Sg1) so that the larger the target value, the larger the first increase amount.

4. The pipette (1) according to any one of claims 1 to 3,
wherein the control part (25) includes a storage part (72) which is configured to store a target value of a suction amount of the first liquid (L1) from the first end (11),
the suction signal (Sg11) includes a maintaining signal (Sg112) driving the driving part (50) so that the volume of the pressure chamber (21) is maintained at the first post-suction volume for a predetermined time period (Tp),
the brake signal (Sg12) is output following the maintaining signal (Sg112), and
the control part (25) is configured to generate the first signal (Sg1) so that the smaller the target value, the shorter the time period (Tp).

5. The pipette (1) according to any one of claims 1 to 4, comprising an input part (71) which is configured to receive at least one input of an operation input by a user and a signal input by an external apparatus, wherein
the control part (25) is configured to be triggered by a first input with respect to the input part (71) to output the suction signal (Sg11), and
is configured to output the brake signal (Sg12) in place of the suction signal (Sg11) at a timing which is determined in advance with respect to start of the output of the suction signal (Sg11).

6. The pipette (1) according to claim 5, wherein
the first signal (Sg1) includes a first stand-by signal driving the driving part (50) so that the volume of the pressure chamber (21) is maintained at a first completion volume which is not less than the post-braking volume, and
the control part (25) is configured to be triggered by a second input which is applied with respect to the input part (71) after the first input and is configured to output a second signal (Sg2) driving the driving part (50) in place of the first stand-by signal so that the volume of the pressure chamber (21) increases from the first completion volume and a second liquid (L2) is suctioned from the first end (11).

7. The pipette (1) according to claim 6, wherein
the second signal (Sg2) includes a second stand-by signal maintaining the volume of the pressure chamber (21) at a second completion volume which is larger than the first completion volume, and
the control part (25) is configured to be triggered by a third input which is applied with respect to the input part (71) after the second input and is configured to output a third signal (Sg3) driving the driving part (50) in place of the second signal (Sg2) so that the volume of the pressure chamber (21) increases from the second completion volume, then repeatedly increases and decreases.

8. The pipette (1) according to any one of claims 1 to 7, wherein
the driving part (50) forms a portion of an inner surface of the pressure chamber (21) and is configured to change the volume of the pressure chamber (21) by a flexural deformation of the inner surface,
the control part (25) is configured to output an initial signal (Sg0) driving the driving part (50) in accordance with a user operation with respect to a switch before output of the first signal (Sg1) so that the volume of the pressure chamber (21) becomes the first pre-suction volume, and
the initial signal (Sg0) is a signal where the inner surface is made to flex toward an inner side of the pressure chamber (21).

9. A liquid collection method using a pipette (1) which comprises a capillary (10) opened in a first end (11) and a second end (12) which form two ends in a longitudinal direction, a pressure chamber (21) opened into an internal portion of the capillary (10) through the second end (12), and a driving part (50) being an actuator (40) configured to deform according to an electrical signal and thereby change a volume of the pressure chamber (21), the method comprising:
a liquid contact step (SU11) of bringing the first end (11) into contact with a liquid,
a suction step (SC12) of increasing the volume of the pressure chamber (21) by the driving part (50) from a first pre-suction volume before suction of the liquid to a first post-suction volume by a first increase amount in a state where the first end (11) is made to contact the liquid and thereby suction the liquid from the first end (11) into the capillary (10), and
a liquid separation step (SU13) of separating the first end (11) from a remainder of the liquid after a portion of the liquid is suctioned in the capillary (10),
**characterized in that** the method further comprises
a brake step (SC14) of reducing the volume of the pressure chamber (21) by the driving part (50) from the first post-suction volume to a post-braking volume by a reduction amount having a smaller absolute value than the first increase amount after the suction step (SC12) and before the liquid separation step (SU13), wherein the larger the first increase amount, the larger the absolute value of the reduction amount.

## Patentansprüche

1. Pipette (1), umfassend:
eine Kapillare (10), die an einem ersten Ende (11) und einem zweiten Ende (12) geöffnet ist, die zwei Enden in Längsrichtung bilden;
eine Druckkammer (21), die in einen Innenabschnitt der Kapillare (10) über das zweite Ende (12) eines Innenabschnitts der Kapillare (10) geöffnet ist;
einen Antriebsteil (50), bei dem es sich um einen Aktuator (40) handelt, der dazu ausgelegt ist, sich gemäß einem durch einen Steuerteil (25) ausgegebenen elektrischen Signal zu verformen und dadurch ein Volumen der Druckkammer (21) zu ändern; und
den Steuerteil (25), der zum Steuern des Antriebsteils (50) ausgelegt ist, wobei
der Steuerteil (25) dazu ausgelegt ist, ein erstes elektrisches Signal (Sg1) auszugeben, das den Antriebsteil (50) antreibt, sodass das Volumen der Druckkammer (21) zunimmt und eine erste Flüssigkeit (L1) von dem ersten Ende (11) angesaugt wird,
das erste Signal (Sg1) ein Ansaugsignal (Sg11) enthält, das den Antriebsteil (50) ansteuert, sodass das Volumen der Druckkammer (21) von einem ersten Voransaugvolumen vor dem Ansaugen der ersten Flüssigkeit (L1) um einen ersten Vergrößerungsbetrag auf ein erstes Nachansaugvolumen zunimmt,
**dadurch gekennzeichnet, dass**
das erste Signal (Sg1) ferner Folgendes umfasst:
ein Bremssignal (Sg12), das den Antriebsteil (50) ansteuert, sodass das Volumen der Druckkammer (21) durch den Antriebsteil (50) von dem ersten Nachansaugvolumen um einen Verkleinerungsbetrag mit einem kleineren Absolutwert als der erste Vergrößerungsbetrag auf ein Nachbremsvolumen verkleinert wird, wobei das Bremssignal (Sg12) nach dem Ansaugsignal (Sg11) ausgegeben wird, und
der Steuerteil (25) dazu ausgelegt ist, das erste Signal (Sg1) zu erzeugen, sodass der Absolutwert des Verkleinerungsbetrags umso größer ist, je größer der erste Vergrößerungsbetrag ist.

2. Pipette (1) gemäß Anspruch 1, wobei
das Ansaugsignal (Sg11) ein Aufrechterhaltungssignal (Sgl12) enthält, das den Antriebsteil (50) ansteuert, sodass das Volumen der Druckkammer (21) für eine vorbestimmte Zeitspanne (Tp) auf dem ersten Nachansaugvolumen aufrechterhalten wird,
das Bremssignal (Sg12) im Anschluss an das Aufrechterhaltungssignal (Sgl12) ausgegeben wird, und
der Steuerteil (25) dazu ausgelegt ist, das erste Signal (Sg1) zu erzeugen, sodass der Absolutwert des Verkleinerungsbetrags umso größer ist, je kürzer die Zeitspanne (Tp) ist.

3. Pipette (1) gemäß Anspruch 1 oder 2,
wobei der Steuerteil (25) einen Speicherteil (72) enthält, der dazu ausgelegt ist, einen Sollwert einer Ansaugmenge der ersten Flüssigkeit (L1) aus dem ersten Ende (11) zu speichern, und
der Steuerteil (25) dazu ausgelegt ist, das erste Signal (Sg1) zu erzeugen, sodass der erste Vergrößerungsbetrag umso größer ist, je größer der Sollwert ist.

4. Pipette (1) gemäß einem der Ansprüche 1 bis 3,
wobei der Steuerteil (25) einen Speicherteil (72) enthält, der dazu ausgelegt ist, einen Sollwert einer Ansaugmenge der ersten Flüssigkeit (L1) aus dem ersten Ende (11) zu speichern,
das Ansaugsignal (Sg11) ein Aufrechterhaltungssignal (Sgl12) enthält, das den Antriebsteil (50) ansteuert, sodass das Volumen der Druckkammer (21) für eine vorbestimmte Zeitspanne (Tp) auf dem ersten Nachansaugvolumen aufrechterhalten wird,
das Bremssignal (Sg12) im Anschluss an das Aufrechterhaltungssignal (Sgl12) ausgegeben wird, und
der Steuerteil (25) dazu ausgelegt ist, das erste Signal (Sg1) zu erzeugen, sodass die Zeitspanne (Tp) umso kürzer ist, je kleiner der Sollwert ist.

5. Pipette (1) gemäß einem der Ansprüche 1 bis 4, die einen Eingabeteil (71) umfasst, der dazu ausgelegt ist, mindestens eine Eingabe einer Bedienungseingabe durch einen Benutzer und eine Signaleingabe durch eine externe Vorrichtung zu empfangen, wobei
der Steuerteil (25) dazu ausgelegt ist, durch eine erste Eingabe in Bezug auf den Eingabeteil (71) ausgelöst wird, um das Ansaugsignal (Sg11) auszugeben, und
dazu ausgelegt ist, das Bremssignal (Sg12) anstelle des Ansaugsignals (Sg11) zu einem Zeitpunkt auszugeben, der im Voraus in Bezug auf den Beginn der Ausgabe des Ansaugsignals (Sg11) bestimmt wird.

6. Pipette (1) gemäß Anspruch 5, wobei
das erste Signal (Sg1) ein erstes Bereitschaftssignal enthält, das den Antriebsteil (50) antreibt, sodass das Volumen der Druckkammer (21) auf einem ersten Fertigstellungsvolumen aufrechterhalten wird, das nicht kleiner als das Nachbremsvolumen ist, und
der Steuerteil (25) dazu ausgelegt ist, durch eine zweite Eingabe ausgelöst zu werden, die in Bezug auf den Eingabeteil (71) nach der ersten Eingabe angelegt wird, und dazu ausgelegt ist, ein zweites Signal (Sg2) auszugeben, das den Antriebsteil (50) anstelle des ersten Bereitschaftssignals antreibt, sodass das Volumen der Druckkammer (21) von dem ersten Fertigstellungsvolumen zunimmt und eine zweite Flüssigkeit (L2) aus dem ersten Ende (11) angesaugt wird.

7. Pipette (1) gemäß Anspruch 6, wobei
das zweite Signal (Sg2) ein zweites Bereitschaftssignal enthält, das das Volumen der Druckkammer (21) auf einem zweiten Fertigstellungsvolumen aufrechterhält, das größer als das erste Fertigstellungsvolumen ist, und
der Steuerteil (25) dazu ausgelegt ist, durch eine dritte Eingabe ausgelöst zu werden, die in Bezug auf den Eingabeteil (71) nach der zweiten Eingabe angelegt wird, und dazu ausgelegt ist, ein drittes Signal (Sg3) auszugeben, das den Antriebsteil (50) anstelle des zweiten Signals (Sg2) antreibt, sodass das Volumen der Druckkammer (21) von dem zweiten Fertigstellungsvolumen an zunimmt und dann wiederholt zunimmt und abnimmt.

8. Pipette (1) gemäß einem der Ansprüche 1 bis 7, wobei
der Antriebsteil (50) einen Abschnitt einer Innenfläche der Druckkammer (21) bildet und dazu ausgelegt ist, das Volumen der Druckkammer (21) durch eine Biegeverformung der Innenfläche zu verändern,
der Steuerteil (25) dazu ausgelegt ist, ein Anfangssignal (Sg0) auszugeben, das den Antriebsteil (50) gemäß einer Benutzerbedienung in Bezug auf einen Schalter vor der Ausgabe des ersten Signals (Sg1) anzutreiben, sodass das Volumen der Druckkammer (21) das erste Vorabsaugvolumen wird, und
das Anfangssignal (Sg0) ein Signal ist, bei dem die Innenfläche in Richtung einer Innenseite der Druckkammer (21) gebogen wird.

9. Flüssigkeitssammelverfahren unter Verwendung einer Pipette (1), die eine Kapillare (10), die an einem ersten Ende (11) und einem zweiten Ende (12), die zwei Enden in einer Längsrichtung bilden, geöffnet ist, eine Druckkammer (21), die durch das zweite Ende (12) in einen Innenabschnitt der Kapillare (10) geöffnet ist, und einen Antriebsteil (50), der ein Aktuator (40) ist, der dazu ausgelegt ist, sich gemäß einem elektrischen Signal zu verformen und dadurch ein Volumen der Druckkammer (21) zu ändern, umfasst, wobei das Verfahren Folgendes umfasst:
einen Flüssigkeitskontaktschritt (SU11), bei dem das erste Ende (11) mit einer Flüssigkeit in Kontakt gebracht wird,
einen Ansaugschritt (SC12), bei dem das Volumen der Druckkammer (21) durch den Antriebsteil (50) von einem ersten Voransaugvolumen vor dem Ansaugen der Flüssigkeit um einen ersten Vergrößerungsbetrag auf ein erstes Nachansaugvolumen in einem Zustand vergrößert wird, in dem das erste Ende (11) dazu gebracht wird, die Flüssigkeit zu berühren und dadurch die Flüssigkeit von dem ersten Ende (11) in die Kapillare (10) anzusaugen, und
einen Flüssigkeitstrennungsschritt (SU13), bei dem das erste Ende (11) von einem Rest der Flüssigkeit getrennt wird, nachdem ein Teil der Flüssigkeit in die Kapillare (10) angesaugt wurde,
**dadurch gekennzeichnet, dass** das Verfahren ferner Folgendes umfasst:
einen Bremsschritt (SC14), bei dem das Volumen der Druckkammer (21) nach dem Ansaugschritt (SC12) und vor dem Flüssigkeitstrennschritt (SU13) durch den Antriebsteil (50) von dem ersten Nachansaugvolumen um einen Verkleinerungsbetrag, der einen kleineren Absolutwert als der erste Vergrößerungsbetrag aufweist, auf ein Nachbremsvolumen verkleinert wird, wobei der Absolutwert des Verkleinerungsbetrags umso größer ist, je größer der erste Vergrößerungsbetrag ist.

## Revendications

1. Pipette (1), comprenant :
un tube capillaire (10) ouvert en une première extrémité (11) et une seconde extrémité (12) qui forment deux extrémités dans une direction longitudinale ;
une chambre de pression (21) ouverte sur une portion interne du tube capillaire (10) par l'intermédiaire de la seconde extrémité (12) d'une portion interne du tube capillaire (10) ;
une partie d'excitation (50), qui est un actionneur (40), configurée pour se déformer selon un signal électrique envoyé, en sortie, par une partie de commande (25) et ainsi changer un volume de la chambre de pression (21) ; et
la partie de commande (25) qui est configurée pour commander la partie d'excitation (50), dans laquelle
la partie de commande (25) est configurée pour envoyer, en sortie, un premier signal électrique (Sg1) excitant la partie d'excitation (50) pour que le volume de la chambre de pression (21) augmente et un premier liquide (L1) soit aspiré à partir de la première extrémité (11),
le premier signal (Sg1) inclut
un signal d'aspiration (Sg11) excitant la partie d'excitation (50) pour que le volume de la chambre de pression (21) augmente depuis un premier volume pré-aspiration avant l'aspiration du premier liquide (L1) jusqu'à un premier volume post-aspiration selon une première quantité d'augmentation,
**caractérisée en ce que**
le premier signal (Sg1) inclut en outre
un signal de freinage (Sg12) excitant la partie d'excitation (50) pour que le volume de la chambre de pression (21) soit réduit, par la partie d'excitation (50), depuis le premier volume post-aspiration jusqu'à un volume post-freinage, selon une quantité de réduction ayant une valeur absolue plus petite que la première quantité d'augmentation, le signal de freinage (Sg12) étant envoyé, en sortie, suivant le signal d'aspiration (Sg11), et
la partie de commande (25) est configurée pour générer le premier signal (Sg1) pour que, plus la première quantité d'augmentation est grande, plus la valeur absolue de la quantité de réduction soit grande.

2. Pipette (1) selon la revendication 1, dans laquelle
le signal d'aspiration (Sg11) inclut un signal de maintien (Sg112) excitant la partie d'excitation (50) pour que le volume de la chambre de pression (21) soit maintenu au premier volume post-aspiration pendant une période prédéterminée (Tp),
le signal de freinage (Sg12) est envoyé, en sortie, suivant le signal de maintien (Sg112), et
la partie de commande (25) est configurée pour générer le premier signal (Sg1) pour que, plus la période (Tp) est courte, plus la valeur absolue de la quantité de réduction soit grande.

3. Pipette (1) selon la revendication 1 ou 2,
dans laquelle la partie de commande (25) inclut une partie de stockage (72) qui est configurée pour stocker une valeur cible d'une quantité d'aspiration du premier liquide (L1) provenant de la première extrémité (11), et
la partie de commande (25) est configurée pour générer le premier signal (Sg1) pour que, plus la valeur cible est grande, plus la première quantité d'augmentation soit grande.

4. Pipette (1) selon l'une quelconque des revendications 1 à 3,
dans laquelle la partie de commande (25) inclut une partie de stockage (72) qui est configurée pour stocker une valeur cible d'une quantité d'aspiration du premier liquide (L1) provenant de la première extrémité (11),
le signal d'aspiration (Sg11) inclut un signal de maintien (Sg112) excitant la partie d'excitation (50) pour que le volume de la chambre de pression (21) soit maintenu au premier volume post-aspiration pendant une période prédéterminée (Tp),
le signal de freinage (Sg12) est envoyé, en sortie, suivant le signal de maintien (Sg112), et
la partie de commande (25) est configurée pour générer le premier signal (Sg1) pour que, plus la valeur cible est petite, plus la période (Tp) soit courte.

5. Pipette (1) selon l'une quelconque des revendications 1 à 4, comprenant une partie d'entrée (71) qui est configurée pour recevoir au moins une entrée d'une opération entrée par un utilisateur et un signal entré par un appareil externe, dans laquelle
la partie de commande (25) est configurée pour être déclenchée par une première entrée par rapport à la partie d'entrée (71) pour envoyer, en sortie, le signal d'aspiration (Sg11), et est configurée pour envoyer, en sortie, le signal de freinage (Sg12) à la place du signal d'aspiration (Sg11) à un instant qui est déterminé d'avance par rapport à un commencement de l'envoi, en sortie, du signal d'aspiration (Sg11).

6. Pipette (1) selon la revendication 5, dans laquelle
le premier signal (Sg1) inclut un premier signal de mise en attente excitant la partie d'excitation (50) pour que le volume de la chambre de pression (21) soit maintenu à un premier volume final qui n'est pas inférieur au volume post-freinage, et
la partie de commande (25) est configurée pour être déclenchée par une deuxième entrée qui est appliquée par rapport à la partie d'entrée (71) après la première entrée et est configurée pour envoyer, en sortie, un deuxième signal (Sg2) excitant la partie d'excitation (50) à la place du premier signal de mise en attente pour que le volume de la chambre de pression (21) augmente depuis le premier volume final et un second liquide (L2) soit aspiré à partir de la première extrémité (11).

7. Pipette (1) selon la revendication 6, dans laquelle
le deuxième signal (Sg2) inclut un second signal de mise en attente maintenant le volume de la chambre de pression (21) à un second volume final qui est plus grand que le premier volume final, et
la partie de commande (25) est configurée pour être déclenchée par une troisième entrée qui est appliquée par rapport à la partie d'entrée (71), après la deuxième entrée, et est configurée pour envoyer, en sortie, un troisième signal (Sg3) excitant la partie d'excitation (50) à la place du deuxième signal (Sg2) pour que le volume de la chambre de pression (21) augmente depuis le second volume final, puis augmente et diminue à plusieurs reprises.

8. Pipette (1) selon l'une quelconque des revendications 1 à 7, dans laquelle
la partie d'excitation (50) forme une portion d'une surface intérieure de la chambre de pression (21) et est configurée pour changer le volume de la chambre de pression (21) par l'intermédiaire d'une déformation à flexion de la surface intérieure,
la partie de commande (25) est configurée pour envoyer, en sortie, un signal initial (Sg0) excitant la partie d'excitation (50) conformément à une opération utilisateur par rapport à un interrupteur avant l'envoi, en sortie, du premier signal (Sg1) pour que le volume de la chambre de pression (21) passe au premier volume pré-aspiration, et
le signal initial (Sg0) est un signal où la surface intérieure est forcée de se fléchir vers un côté intérieur de la chambre de pression (21).

9. Procédé de collecte de liquide, utilisant une pipette (1) qui comprend un tube capillaire (10) ouvert en une première extrémité (11) et une seconde extrémité (12) qui forment deux extrémités dans une direction longitudinale, une chambre de pression (21) ouverte sur une portion interne du tube capillaire (10) par l'intermédiaire de la seconde extrémité (12), et une partie d'excitation (50), qui est un actionneur (40), configurée pour se déformer selon un signal électrique et ainsi changer un volume de la chambre de pression (21), le procédé comprenant :
une étape de contact avec liquide (SU11), de la mise de la première extrémité (11) en contact avec un liquide,
une étape d'aspiration (SC12), de l'augmentation du volume de la chambre de pression (21), par la partie d'excitation (50), depuis un premier volume pré-aspiration, avant l'aspiration du liquide, jusqu'à un premier volume post-aspiration, selon une première quantité d'augmentation, dans un état où la première extrémité (11) est forcée d'entrer en contact avec le liquide, et ainsi de l'aspiration du liquide à partir de la première extrémité (11) dans le tube capillaire (10), et
une étape de séparation de liquide (SU13), de la séparation de la première extrémité (11) par rapport à un reste du liquide après qu'une portion du liquide est aspirée dans le tube capillaire (10),
**caractérisé en ce que** le procédé comprend en outre
une étape de freinage (SC14), de la réduction du volume de la chambre de pression (21) par la partie d'excitation (50), depuis le premier volume post-aspiration jusqu'à un volume post-freinage, selon une quantité de réduction ayant une valeur absolue plus petite que la première quantité d'augmentation après l'étape d'aspiration (SC12) et avant l'étape de séparation de liquide (SU13), dans lequel, plus la première quantité d'augmentation est grande, plus la valeur absolue de la quantité de réduction est grande.
